# EUROPÄISCHE PATENTSCHRIFT

(11) **EP 3 416 860 B1**
(45) Veröffentlichungstag und Bekanntmachung des Hinweises auf die Patenterteilung: **20.11.2019**
(21) Anmeldenummer: 17704767.7
(22) Anmeldetag: 13.02.2017
(51) Int. Cl.: B60T 1/10, B60T 7/20, B60T 8/17, B60L 7/18

(54) **VERFAHREN ZUR ANSTEUERUNG EINES ANGETRIEBENEN ANHÄNGERS SOWIE EIN MOTORGETRIEBENER ANHÄNGER**
METHOD FOR CONTROLLING A DRIVEN TRAILER, AND MOTOR-DRIVEN TRAILER
PROCÉDÉ DE COMMANDE D'UNE REMORQUE ENTRAÎNÉE ET REMORQUE ENTRAÎNÉE PAR MOTEUR

(30) Priorität: 18.02.2016 DE 102016102847
(43) Veröffentlichungstag der Anmeldung: 26.12.2018
(73) Patentinhaber: Nüwiel GmbH, 21079 Hamburg (DE)
(72) Erfinder: RABBIOSI, Sandro, 21073 Hamburg (DE); AMAN KHAN, Fahad, 21073 Hamburg (DE); TOMIYAMA, Natalia, 22303 Hamburg (DE)
(74) Vertreter: Hauck Patentanwaltspartnerschaft mbB
(86) Internationale Anmeldenummer: PCT/EP2017/053166
(87) Internationale Veröffentlichungsnummer: WO 2017/140626

(56) Entgegenhaltungen:
- DE-A1-102010 042 907
- US-A1- 2005 151 420
- US-A1- 2013 311 058

## Beschreibung

Die vorliegende Erfindung betrifft ein Verfahren zur Ansteuerung eines mit einem Elektromotor angetriebenen Anhängers sowie einen derartigen motorgetriebenen Anhänger.

Anhänger nach dem Stand der Technik beruhen auf Kraftmesssensoren, insbesondere Dehnungsmessern, welche zwischen dem Anhänger und dem Schleppfahrzeug auftretende Kräfte messen. Diese Kraftmesssensoren sind bekanntermaßen anfällig gegenüber äußeren Einflüssen, insbesondere gegenüber Umwelteinflüssen wie Temperatur- und Feuchtigkeitsschwankungen. Zudem ist die Verbindung zwischen Anhänger und Schleppfahrzeug nach dem Stand der Technik stets starr und somit anfällig gegenüber axialen sowie lateralen Kräften zwischen Anhänger und Schleppfahrzeug. Insbesondere können starke Vibrationen bis hin zu resonanten Oszillationen in dem Anhänger-Schleppfahrzeug-System auftreten. Dies führt dazu, dass der Kraftmesssensor eine Vielzahl von Messdaten generiert, was wiederum zu einem hohen Auswerteaufwand für die Steuereinheit führt. Auch gestaltet es sich als schwierig, die für die Steuerung des Anhängers wesentlichen Messdaten von dem durch Vibrationen und anderen Störgrößen erzeugten Untergrundrauschen zu unterscheiden. Dies beeinträchtigt unter anderem den Fahrkomfort und erhöht den Energieverbrauch.

Ein motorgetriebener Anhänger für ein Fahrrad ist bekannt aus US 2012/0037435 A1. Der dort beschriebene Anhänger wird über eine Zugstange mit dem Fahrrad verbunden, wobei die Zugstange über einen Kraftmesser verfügt und der Anhänger einen Motor aufweist. Abhängig von dem Geschwindigkeitsunterschied zwischen dem Fahrrad und dem Anhänger misst der Kraftmesser eine kompressive Kraft, wenn der Anhänger schneller als das Fahrrad ist oder eine Zugkraft, wenn der Anhänger dem Fahrrad nachläuft. Der Motor beschleunigt den Anhänger entsprechend der durch den Kraftmesssensor gemessenen Kräfte.

US 8,365,849 B2 beschreibt ein System zum Schleppen eines Anhängers. Der Anhänger umfasst einen elektrischen Motor, Bremsen, eine Zugstange sowie einen an der Zugstange angeordneten Kraftmesssensor. Abhängig von den an dem Kraftmesser gemessenen mechanischen Kräften wird der Anhänger über den Motor beschleunigt oder über Bremsen abgebremst.

DE 10 2010 051 838 A1 beschreibt einen Anhänger für ein Fahrrad, wobei der Anhänger ein elektrische Maschine umfasst, die sowohl als Bremse wie auch als Motor wirken kann, um zu verhindern, dass der Anhänger beim Schieben sowie beim Abbremsen des Fahrrads eine merkliche Rückwirkung auf das Fahrrad verursacht. Um dies zu erreichen, werden unterschiedliche Sensoren beschrieben. So werden ein Pedaldrucksensor, ein im Bremshebel vorgesehener Bremskraftsensor sowie ein in der Verbindung zwischen Fahrrad und Anhänger vorgesehener Kraftmesssensors vorgeschlagen. Die Signale dieser Sensoren werden an eine elektronische Logikschaltung übermittelt, die wiederum die elektrische Maschine und/oder die Bremsen ansteuert. Über den Kraftmesssensor kann ermittelt werden, ob das Fahrrad eine Zugkraft oder eine Druckkraft auf den Anhänger ausübt, wobei abhängig von den gemessenen Signalen Motor bzw. Bremsen angesteuert werden, um den Anhänger dem Fahrrad nachzuführen. Alternativ zu der Kraftmessung werden vorgespannte Messsysteme vorgeschlagen, wobei entweder ein Drucksensor Druckänderung in einem Zylinder aufnimmt oder ein Positionssensor die Position einer mittels Federn gelagerten Scheibe misst. Solche vorgespannten Messsysteme verfügen zwar über eine weniger starre Kopplung zwischen Anhänger und Fahrrad, jedoch verbleiben auch hier noch störende, insbesondere pulsierende, Rückkopplungseffekte.

DE 10 2006 009 862 A1 beschreibt einen Fahrradschubanhänger zum Treiben und Bremsen eines Fahrrads, wobei eine Batterie als Trägheitsmasse in einem Rahmen des Anhängers gelagert ist, so dass bei einer Bremsbewegung die Batterie nach vorne schwingt und bei einer Beschleunigungsbewegung die Batterie nach hinten schwingt. Die Batterie ist über einen Steuerhebel mit einem Positionsistwertgeber sowie einem Bowdenzug gelenkig verbunden. Bei einem Bremsvorgang wird über den Positionsistwertgeber ein Elektromotor rekuperativ betrieben während gleichzeitig über den Bowdenzug eine mechanische Bremse aktiviert wird.

Dokument US 2013/0311058 A1 offenbart ein Verfahren zur Ansteuerung eines mit einem Elektromotor angetriebenen Anhängers.

Der Erfindung liegt daher die Aufgabe zugrunde, das Schleppen eines Anhängers durch ein Schleppfahrzeug möglichst einfach und zuverlässig zu gestalten, den Energieverbrauch gering zu halten sowie den Fahrkomfort zu erhöhen.

Die Erfindung löst die Aufgabe durch die Ansprüche 1 und 8. Vorteilhafte Ausgestaltungen finden sich in den Unteransprüchen, der Beschreibung sowie den Figuren.

Erfindungsgemäß weist das Verfahren zur Ansteuerung eines mit einem Elektromotor angetriebenen Anhängers die folgenden Schritte auf:
- Definieren eines Abstands zwischen Anhänger und Schleppfahrzeug als Neutralstellung,
- Messen einer Abweichung des Abstands zwischen Anhänger und Schleppfahrzeug von der Neutralstellung und Ausgabe dieser Abweichung als Abstandswert,
- Elektrisch betätigtes Bremsen des Anhängers, wenn der Abstand zwischen Anhänger und Schleppfahrzeug gegenüber der Neutralstellung um mindestens einen ersten Abstandswert verringert ist,
- Mechanisch betätigtes Bremsen des Anhängers unabhängig von dem elektrisch betätigten Bremsen, wenn der Abstand zwischen Anhänger und Schleppfahrzeug gegenüber der Neutralstellung um mindestens einen zweiten Abstandswert verringert ist, wobei der zweite Abstandswert größer als der erste Abstandswert ist,
- Beschleunigen des Anhängers durch den Elektromotor, wenn der Abstand zwischen Anhänger und Schleppfahrzeug gegenüber der Neutralstellung um einen dritten Abstandswert vergrößert ist.

Nach dem erfindungsgemäßen Verfahren wird ein Abstand zwischen Schleppfahrzeug und Anhänger als Neutralstellung definiert. Anschließend wird im Fahrbetrieb der Abstand zwischen Anhänger und Schleppfahrzeug kontinuierlich oder in definierbaren zeitlichen Abständen überwacht und eine Abweichung des Abstandes zwischen dem Anhänger und dem Schleppfahrzeug von der Neutralstellung gemessen sowie als Abstandswert ausgegeben. In Abhängigkeit der gemessenen und als Abstandswert ausgegebenen Abweichung wird der Anhänger entweder gebremst oder beschleunigt. Das Bremsen wird elektrisch und/oder mechanisch betätigt. Sollte sich der Abstand zwischen Anhänger und Schleppfahrzeug verringern, beispielsweise durch eine Verlangsamung des Schleppfahrzeugs, so wird der Anhänger durch eine elektrisch ausgelöste Bremse gebremst, solange der Abstand zwischen Anhänger und Schleppfahrzeug um mindestens einen ersten Abstandswert, jedoch um weniger als einen zweiten Abstandswert verringert ist. Erster und zweiter Abstandswert sind frei wählbar, jedoch ist der zweite Abstandswert größer als der erste Abstandswert. Wenn sich der Abstand zwischen Anhänger und Schleppfahrzeug so weit verringert, dass auch der zweite Abstandswert erreicht oder überschritten wird, so wird der Anhänger durch eine mechanisch ausgelöste Bremse gebremst. Sollte sich der Abstand zwischen Schleppfahrzeug und Anhänger gegenüber der Neutralstellung um mindestens einen dritten Abstandswert vergrößern, so beschleunigt der Elektromotor den Anhänger. Eine Vergrößerung des Abstandes zwischen Schleppfahrzeug und Anhänger kann beispielsweise auftreten, wenn das Schleppfahrzeug beschleunigt oder einen Hang hinauffährt. Bei dem Abstand zwischen Anhänger und Schleppfahrzeug handelt es sich um einen Abstand entlang der Fahrtachse des Schleppfahrzeugs, also um einen axialen Abstand zwischen einer Schleppfahrzeugachse und einer Anhängerachse.

Durch das elektrisch und/oder mechanisch betätigte Bremsen des Anhängers und das Beschleunigen des Anhängers in Abhängigkeit der Abstandsabweichung zwischen Anhänger und Schleppfahrzeug gegenüber der zuvor definierten Neutralstellung reagiert der Anhänger auf die Bewegung des Schleppfahrzeugs. Somit wird letztlich die Neutralstellung als Referenzpunkt gesetzt, auf welchen das System aus Anhänger und Schleppfahrzeug geregelt wird. Die mechanisch betätigte Bremse erlaubt ein sicheres Bremsen des Anhängers auch bei Ausfall oder Fehlfunktion der elektrischen Bremsbetätigung. Das mechanisch betätigte Bremsen kann jedoch grundsätzlich auch ein hydraulisch oder pneumatisch betätigtes Bremsen sein. Wesentlich ist die Unabhängigkeit des mechanisch/ hydraulisch/ pneumatisch betätigten Bremsens von dem elektrisch betätigten Bremsen. Durch das erfindungsgemäße Verfahren kann auf Kraftmesssensoren verzichtet werden. Stattdessen erfolgt eine Messung und Regelung des Abstands zwischen Anhänger und Schleppfahrzeug über eine Abstandsmessung.

Nach einer Ausgestaltung kann das elektrisch betätigte Bremsen des Anhängers ein regeneratives Bremsen sein. Insbesondere kann das regenerative Bremsen über den Elektromotor erreicht werden. Dieser kann hierfür generatorisch betrieben werden. Auch kann nach einer Ausgestaltung das elektrisch betätigte Bremsen des Anhängers ein weiches direktes Bremsen und das mechanisch betätigte Bremsen des Anhängers ein hartes direktes Bremsen sein, wobei das harte direkte Bremsen einen stärkeren Anstieg der Bremskraft in Abhängigkeit der axialen Abstandsabweichung zwischen Anhänger und Schleppfahrzeug aufweist als das weiche direkte Bremsen. Weiches Bremsen bedeutet also das Aufbringen einer geringeren Bremskraft als beim harten Bremsen. Insbesondere kann das weiche und das harte direkte Bremsen über eine direkte Bremse erfolgen. Der Begriff des "direkten Bremsens" und der "direkten Bremse" wurde vorliegend als Unterscheidung zum regenerativen Bremsen durch den Elektromotor gewählt und ist nicht als Einschränkung in der Bauart der Bremsen zu verstehen. Nach Überschreiten des ersten Abstandswerts wird also elektrisch ein Bremsen ausgelöst, welches den Anhänger einerseits über den Elektromotor regenerativ bremsen kann oder andererseits den Anhänger über die direkte Bremse weich direkt bremsen kann. Auch kann simultan regenerativ und weich direkt gebremst werden. Das regenerative Bremsen kann ebenfalls weich sein. Sollte der verringerte Abstand zwischen Schleppfahrzeug und Anhänger einen zweiten Abstandswert erreichen, so wird mechanisch die direkte Bremse ausgelöst. Dies erfolgt hart, also mit einer stärker ansteigenden Bremskraft als beim weichen direkten Bremsen. Es kann auch bei Überschreiten des zweiten Abstandswertes zusätzlich weiter regenerativ gebremst werden.

Nach einer bevorzugten Ausgestaltung kann die durch das regenerative Bremsen zurückgewonnene Bremsenergie einem Energiespeicher zugeführt werden. Die zurückgewonnene Bremsenergie kann einem elektrischen Energiespeicher, beispielsweise einer Batterie oder einem Superkondensator zugeführt werden. Der Elektromotor kann in diesem Fall als Generator fungieren. Auch kann die zurückgewonnene Bremsenergie einem mechanischen Energiespeicher, beispielsweise einem Schwungrad, zugeführt werden. Der Energiespeicher kann in oder an dem Anhänger angeordnet sein. Insbesondere kann auch der Elektromotor im Fahrbetrieb durch den elektrischen Energiespeicher gespeist sein. Durch die Rekuperation kann die Laufzeit des Anhängers ohne externes Laden des Energiespeichers erhöht werden.

Bevorzugt ist die Bremskraft beim elektrisch betätigten Bremsen umso größer, je weiter der Abstand zwischen Anhänger und Schleppfahrzeug nach Überschreiten des ersten Abstandswertes verringert ist. Ebenso ist bevorzugt die Bremskraft beim mechanisch betätigten Bremsen umso größer, je weiter der Abstand zwischen Anhänger und Schleppfahrzeug nach Überschreiten des zweiten Abstandswerts verringert ist. Hierdurch wird die auf den Anhänger wirkende Bremskraft umso stärker, je geringer der Abstand zwischen dem Schleppfahrzeug und dem Anhänger ist. Bevorzugt wird der Anhänger außerdem stärker beschleunigt, je weiter der Abstand zwischen Anhänger und Schleppfahrzeug nach Überschreiten des dritten Abstandswerts vergrößert ist. Das elektrisch betätigte Bremsen und/oder das mechanisch betätigte Bremsen und/oder das Beschleunigen des Anhängers kann proportional, insbesondere linear proportional oder exponentiell proportional, zur Abweichung des axialen Abstands zwischen Anhänger und Schleppfahrzeug von der Neutralstellung sein. Hierdurch wird eine möglichst reaktionsschnelle Nachjustierung der Position des Anhängers zu dem Schleppfahrzeug sichergestellt.

Nach einer Ausgestaltung kann als Schleppfahrzeug ein Fahrrad und/oder als Anhänger ein Fahrradanhänger vorgesehen sein.

Nach einer weiteren Ausgestaltung kann das elektrisch betätigte Bremsen beendet werden, wenn der Abstand zwischen Anhänger und Schleppfahrzeug gegenüber der Neutralstellung um einen vierten Abstandswert verringert ist, wobei der vierte Abstandswert kleiner als der erste Abstandswert ist. Der Anhänger wird erfindungsgemäß elektrisch betätigt gebremst, sobald ein erster Abstandswert überschritten ist. Wenn sich aufgrund des elektrisch betätigten Bremsens der Abstand zwischen Anhänger und Schleppfahrzeug wieder der Neutralstellung annähert, wird nach Erreichen des vierten Abstandswertes, welcher kleiner als der erste Abstandswert ist, der Anhänger nicht länger elektrisch betätigt gebremst. Somit kann das elektrisch betätigte Bremsen bereits beendet werden, bevor die Neutralstellung erreicht ist. Bevorzugt kann weiterhin das mechanisch betätigte Bremsen beendet und das elektrisch betätigte Bremsen begonnen oder fortgeführt werden, wenn der Abstand zwischen Anhänger und Schleppfahrzeug gegenüber der Neutralstellung um einen fünften Abstandswert verringert ist, wobei der fünfte Abstandswert kleiner als der zweite Abstandswert, aber größer als der vierte Abstandswert ist. Insbesondere kann der fünfte Abstandswert auch größer als der erste Abstandswert sein. Ausgehend von der Neutralstellung wird somit sobald der Abstand zwischen Anhänger und Schleppfahrzeug den ersten Abstandswert erreicht, elektrisch betätigt gebremst. Verringert sich der Abstand zwischen Anhänger und Schleppfahrzeug weiter, sodass der zweite Abstandswert überschritten wird, so wird zudem oder ausschließlich mechanisch betätigt gebremst. Wenn sich aufgrund des mechanisch betätigten und ggf. zusätzlich elektrisch betätigten Bremsens der Abstand zwischen Anhänger und Schleppfahrzeug wieder der Neutralstellung nähert, wird nach Erreichen des fünften Abstandswerts, welcher kleiner als der zweite Abstandswert ist, nicht länger mechanisch betätigt gebremst. Es wird lediglich elektrisch betätigt gebremst, wenn der Abstand um weniger als den fünften Abstandswert, jedoch um mehr als den vierten Abstandswert verringert ist. Nähert sich der Abstand zwischen Anhänger und Schleppfahrzeug weiter der Neutralstellung, so wird der Anhänger nicht mehr gebremst, sobald der vierte Abstandswert unterschritten ist. Weicht der Abstand zwischen Anhänger und Schleppfahrzeug in entgegengesetzter Richtung ab, sodass der Abstand zwischen Anhänger und Schleppfahrzeug um mindestens den dritten Abstandswert vergrößert ist, so wird der Anhänger erfindungsgemäß beschleunigt. Bevorzugt wird das Beschleunigen des Anhängers beendet, wenn der Abstand zwischen Anhänger und Schleppfahrzeug gegenüber der Neutralstellung um einen sechsten Abstandswert vergrößert ist, wobei der sechste Abstandswert kleiner als der dritte Abstandswert ist. Nachdem sich der Abstand zwischen Anhänger und Schleppfahrzeug also vergrößert hat, wird der Anhänger beschleunigt, damit sich der Abstand zwischen Anhänger und Schleppfahrzeug wieder der Neutralstellung annähert. Insbesondere wird der Anhänger so lange beschleunigt, bis der Abstand den sechsten Abstandswert unterschreitet. Durch den vierten und sechsten Abstandswert wird somit ein Totbandbereich definiert, in welchem auch bei einer Abweichung des Abstands zwischen Anhänger und Schleppfahrzeug von der Neutralstellung weder gebremst noch beschleunigt wird. Es wird also ein Toleranzbereich definiert, in welchem der Abstand zwischen Anhänger und Schleppfahrzeug schwanken kann, ohne dass nachgesteuert wird. Der fünfte Abstandswert begrenzt den Bereich, in welchem lediglich elektrisch betätigt gebremst wird.

Nach einer bevorzugten Ausgestaltung kann die Neutralstellung derart definiert werden, dass der Anhänger dem Schleppfahrzeug nachläuft, ohne eine Last zu bilden. Der Anhänger kann somit durch gezieltes elektrisch oder mechanisch betätigtes Bremsen bzw. Beschleunigen sein eigenes Gewicht sowie das Gewicht einer eventuell auf dem Anhänger befindlichen Ladung ausgleichen. Diese Betriebsart (Nachlaufmodus) sorgt dafür, dass das Schleppfahrzeug im Wesentlichen keine Last spürt. Nach einer weiteren Ausgestaltung kann die Neutralstellung derart definiert werden, dass der Anhänger das Schleppfahrzeug schiebt. Die Neutralstellung ist hierbei so definiert, dass der Anhänger auf das Schleppfahrzeug in axialer Richtung eine bevorzugt konstante Schubkraft ausübt. Somit kann das Schleppfahrzeug in dieser Betriebsart (Schubmodus), insbesondere bei steilen Bergauffahrten, entlastet werden.

Nach einer Ausgestaltung umfasst das Verfahren weiterhin den Schritt des Messens der Geschwindigkeit des Anhängers. Durch das Messen der Geschwindigkeit kann der Anhänger elektrisch oder mechanisch betätigt gebremst werden, wenn der Anhänger eine definierte Maximalgeschwindigkeit überschreitet. Insbesondere kann der Anhänger elektrisch betätigt über den Elektromotor regenerativ oder über eine direkte Bremse weich oder hart gebremst werden Bevorzugt erfolgt ein direktes Bremsen. Es kann somit sichergestellt werden, dass insbesondere bei steilen Bergabfahrten Schleppfahrzeug und Anhänger eine definierte Maximalgeschwindigkeit nicht überschreiten. Der Anhänger kann durch die direkte Bremse gebremst werden und somit auch die Geschwindigkeit des Schleppfahrzeugs verringern.

Nach einer weiteren Ausgestaltung ist das Verfahren dadurch gekennzeichnet, dass die Geschwindigkeit des Anhängers aufrechterhalten wird, wenn der nicht geschleppte Anhänger geschoben wird. Sollte der Anhänger also nicht mit einem Schleppfahrzeug verbunden sein, sondern beispielsweise manuell durch eine Bedienperson geschoben werden, so kann der Anhänger über den Elektromotor derart angetrieben werden, dass er eine definierte Geschwindigkeit aufrecht erhält, sodass die den Anhänger schiebende Person im Wesentlichen keine oder nur eine geringe Last schieben muss. Wird der Anhänger in diesem Laufmodus betrieben, kann zum Bremsen des Anhängers eine Handbremse an dem Anhänger vorgesehen sein. Bevorzugt betätigt die Handbremse eine direkte Bremse an dem Anhänger. Die Handbremse kann bevorzugt automatisch auslösen, falls die Bedienperson den Anhänger loslässt. Auch kann bevorzugt der Anhänger bei Überschreiten einer definierten Geschwindigkeit automatisch gebremst werden.

Die Erfindung löst die Aufgabe weiter durch einen motorgetriebenen Anhänger, der folgendes aufweist:
- mindestens ein Rad,
- einen Elektromotor zum Antreiben des mindestens einen Rads,
- mindestens eine Speichereinheit zur Energieversorgung des Elektromotors,
- eine Deichsel zur Verbindung des Anhängers mit einem Schleppfahrzeug,
- eine Sensoreinheit an der Deichsel, die dazu ausgebildet ist, zwischen Schleppfahrzeug und Anhänger auftretende Abstandsabweichungen von einer Neutralstellung zu messen und ein der Abstandsabweichung entsprechendes elektrisches Messsignal zu erzeugen,
- eine auf das elektrische Messsignal ansprechende Steuerungseinheit, welche dazu ausgebildet ist, auf Grundlage des elektrischen Messsignals den Anhänger zu bremsen, wenn der Abstand zwischen Anhänger und Schleppfahrzeug gegenüber der Neutralstellung um mindestens einen ersten Abstandswert verringert ist, und auf Grundlage des elektrischen Messsignals der Sensoreinheit den Elektromotor anzusteuern, um den Anhänger zu beschleunigen, wenn der Abstand zwischen Anhänger und Schleppfahrzeug gegenüber der Neutralstellung um einen dritten Abstandswert vergrößert ist,
- einem mechanischen Auslöser, der dazu ausgebildet ist, unabhängig von der Steuerungseinheit auf Grundlage der Abstandsabweichung den Anhänger zu bremsen, wenn der Abstand zwischen Anhänger und Schleppfahrzeug gegenüber der Neutralstellung um mindestens einen zweiten Abstandswert verringert ist, wobei der zweite Abstandswert größer als der erste Abstandswert ist.

Der erfindungsgemäße motorgetriebene Anhänger ist geeignet zur Durchführung des erfindungsgemäßen Verfahrens. Über die Deichsel wird der Anhänger mit dem Schleppfahrzeug verbunden. Die in oder an der Deichsel angeordnete Sensoreinheit misst eventuell auftretende Abstandsabweichungen zwischen dem Schleppfahrzeug und dem Anhänger in Axialrichtung ausgehend von einer Neutralstellung. Weiterhin erzeugt die Sensoreinheit ein dieser Abstandsabweichung entsprechendes elektrisches Messsignal, beispielsweise eine elektrische Spannung. Insbesondere kann dieses elektrische Messsignal proportional, beispielsweise linear proportional oder exponentiell proportional, zur Abstandsabweichung zwischen Schleppfahrzeug und Anhänger ausgehend von der Neutralstellung sein. Das Messsignal enthält somit Informationen über das Maß bzw. die Stärke der Abstandsabweichung zwischen Schleppfahrzeug und Anhänger sowie die Richtung der Abweichung entlang der axialen Achse zwischen Schleppfahrzeug und Anhänger, also insbesondere darüber, ob sich der Abstand zwischen Anhänger und Schleppfahrzeug gegenüber einer Neutralstellung verringert oder vergrößert. Je nachdem, ob der Abstand zwischen Anhänger und Schleppfahrzeug vergrößert oder verkleinert ist, kann das elektrische Messsignal beispielsweise ein entgegengesetztes Vorzeichen aufweisen, insbesondere kann das elektrische Messsignal positiv sein, wenn sich der Abstand zwischen Anhänger und Schleppfahrzeug gegenüber der Neutralstellung vergrößert und negativ sein, wenn sich der Abstand zwischen Anhänger und Schleppfahrzeug gegenüber der Neutralstellung verkleinert. Zudem wird über einen mechanischen Auslöser in Abhängigkeit der Abstandsabweichung, insbesondere in Abhängigkeit von der Verringerung des Abstands zwischen Anhänger und Schleppfahrzeug der Anhänger gebremst. Zusätzlich zu dem elektrischen Messsignal wird also die Information über eine Abstandsabweichung auch über ein den mechanischen Auslöser ausgegeben. Durch den erfindungsgemäßen Anhänger kann auf Kraftmesssensoren verzichtet werden. Stattdessen erfolgt eine Messung und Regelung des Abstands zwischen Anhänger und Schleppfahrzeug über eine Abstandsmessung.

Hierfür wird durch die Steuerungseinheit nach Überschreiten des ersten Abstandswerts elektrisch ein Bremsen ausgelöst, welches bevorzugt den Anhänger einerseits regenerativ bremsen kann oder andererseits den Anhänger weich direkt bremsen kann. Auch kann simultan regenerativ und weich direkt gebremst werden.

Das regenerative Bremsen kann ebenfalls weich sein. Weiterhin wird über den mechanischen Auslöser der Anhänger gebremst, wenn der Abstand zwischen Anhänger und Schleppfahrzeug um mindestens einen zweiten Abstandswert verringert ist. Hierbei ist der zweite Abstandswert größer als der erste Abstandswert. Auch kann, sollte der verringerte Abstand zwischen Schleppfahrzeug und Anhänger einen zweiten Abstandswert erreichen, über den mechanischen Auslöser mechanisch eine Bremseinheit mit direkter Bremse ausgelöst werden. Dies kann hart erfolgen, also mit einer stärker ansteigenden Bremskraft als beim weichen direkten Bremsen. Wie oben bereits erwähnt, ist der Begriff des "direkten Bremsens" und der "direkten Bremse" als Unterscheidung zum regenerativen Bremsen durch den Elektromotor gewählt und ist nicht als Einschränkung in der Bauart der Bremsen zu verstehen. Es kann auch bei Überschreiten des zweiten Abstandswertes zusätzlich weiter regenerativ gebremst werden. Außerdem ist die Steuerungseinheit dazu ausgebildet, den Anhänger zu beschleunigen, wenn der Abstand zwischen Anhänger und Schleppfahrzeug gegenüber der Neutralstellung um einen dritten Abstandswert vergrößert ist. Wie bereits oben in der Beschreibung zum erfindungsgemäßen Verfahren erläutert, kann der Anhänger somit auf die Bewegung des Schleppfahrzeugs reagieren, indem der Anhänger regenerativ bzw. direkt gebremst wird, wenn sich der Abstand zwischen Anhänger und Schleppfahrzeug zu stark verringert und beschleunigt wird, wenn sich der Abstand zwischen Anhänger und Schleppfahrzeug zu stark vergrößert.

Nach einer Ausgestaltung kann die auf das elektrische Messsignal ansprechende Steuerungseinheit dazu ausgebildet sein, auf Grundlage des elektrischen Messsignals den Anhänger regenerativ zu bremsen und/oder den Anhänger weich direkt zu bremsen. Auch kann nach einer Ausgestaltung der mechanische Auslöser dazu ausgebildet sein, auf Grundlage der Abstandsabweichung den Anhänger hart direkt zu bremsen. Das harte direkte Bremsen weist hierbei einen stärkeren Anstieg der Bremskraft in Abhängigkeit der axialen Abstandsabweichung zwischen Anhänger und Schleppfahrzeug auf als das weiche direkte Bremsen. Weiches Bremsen bedeutet also das flachere Ansteigen der Bremskraft mit zunehmender Abstandsabweichung als beim harten Bremsen. Nach einer weiteren Ausgestaltung kann das weiche und das harte direkte Bremsen über eine Bremseinheit mit einer direkten Bremse und das regenerative Bremsen über den Elektromotor erfolgen. Über die Sensoreinheit wird die direkte Bremse der Bremseinheit auf Grundlage des elektrischen Messsignals zum weichen direkten Bremsen elektrisch angesteuert. Über den mechanischen Auslöser wird die direkte Bremse der Bremseinheit zum harten Bremsen mechanisch angesteuert. Die Bremseinheit ist zur Steuerung des harten direkten Bremsens unmittelbar mit der Sensoreinheit verbunden. Die direkten Bremsen sind somit auch dann zum harten direkten Bremsen fähig, wenn die Steuerungseinheit fehlerhaft arbeitet oder ausfällt, beispielsweise durch einen Stromausfall. Insbesondere sind die direkten Bremsen somit besonders reaktionsschnell.

Sollte ein Elektromotor verwendet werden, welcher kein regeneratives Bremsen ermöglicht, so wird durch das elektrische Messsignal über die Steuerungseinheit nur das weiche direkte Bremsen ausgelöst. Sollte der Elektromotor zur Rekuperation fähig sein, so wird durch das elektrische Messsignal über die Steuerungseinheit das regenerative oder das weiche direkte Bremsen oder beide simultan ausgelöst. Der Begriff des "direkten Bremsens" und der "direkten Bremse" wurde vorliegend als Unterscheidung zum regenerativen Bremsen durch den Elektromotor gewählt und ist nicht als Einschränkung in der Wahl der Bremsen zu verstehen. Auch kann der Anhänger mehr als ein Rad aufweisen. Dann können die Räder auf Grundlage des elektrischen Messsignals über die Steuereinheit unabhängig voneinander gebremst werden. Beispielsweise kann ein Rad regenerativ über den an dem Rad angeordneten Elektromotor gebremst und ein zweites Rad über die direkte Bremse weich gebremst werden. Auch können über das direkte weiche Bremsen unterschiedliche Bremskräfte auf die Räder gebracht werden. Dies erhöht die Stabilität des Anhänger-Schleppfahrzeug-Systems bei Drehmanövern, insbesondere bei hohen Geschwindigkeiten und Kurvenfahrten.

Nach einer bevorzugten Ausgestaltung umfasst der Anhänger weiter eine zumindest mit der Steuerungseinheit und dem Elektromotor verbundene Motorsteuerung. Bevorzugt umfasst der Anhänger außerdem einen Energiespeicher wie beispielsweise eine Batterie, ein Schwungrad oder ein Superkondensator zur Energieversorgung des Elektromotors. Die Steuerungseinheit kann somit Steuerungssignale an die Motorsteuerung weitergeben, welche daraufhin den Elektromotor derart ansteuert, dass der Anhänger beschleunigt oder regenerativ gebremst wird. Zudem kann weiterhin bevorzugt eine mit dem Energiespeicher, der Motorsteuerung und der Steuerungseinheit verbundene Leistungssteuerung vorgesehen sein. Somit kann, gesteuert durch die Leistungssteuerung sowie die Motorsteuerung, Energie aus dem Energiespeicher dem Motor zugeführt werden. Zurückgewonnene Bremsenergie kann entsprechend über Motor- und Leistungssteuerung wieder in den Energiespeicher eingespeist werden. Der Elektromotor kann in diesem Fall als Generator fungieren. Der Energiespeicher kann in oder an dem Anhänger angeordnet sein. Durch diese Rekuperation kann der Anhänger besonders energieeffizient betrieben und die Laufzeit, insbesondere bei Verwendung einer Batterie, erhöht werden.

Nach einer weiteren Ausgestaltung umfasst der Anhänger eine Verbrauchersteuerung zur Steuerung von elektrischen Verbrauchern. Die Verbrauchersteuerung kann insbesondere mit der eventuell vorhandenen Leistungssteuerung verbunden sein. Somit können über die Verbrauchersteuerung elektrische Verbraucher, wie beispielsweise die Lichtmaschine, mit Energie versorgt und/oder gesteuert werden.

Nach einer bevorzugten Ausgestaltung umfasst der Anhänger weiterhin einen zumindest mit dem Elektromotor und der Steuerungseinheit verbundenen Geschwindigkeitssensor. Wie ebenfalls bereits zum Verfahren erläutert, erlaubt dieser Geschwindigkeitssensor die Definition einer Maximalgeschwindigkeit sowie das erleichterte Schieben des in diesem Falle nicht geschleppten Anhängers.

Nach einer Ausgestaltung kann der motorgetriebene Anhänger ein motorgetriebener Fahrradanhänger zur Verbindung mit einem Fahrrad als Schleppfahrzeug sein.

Nach einer Ausgestaltung umfasst die Sensoreinheit des Anhängers eine Zugstange zur Verbindung mit dem Schleppfahrzeug und ein Gehäuse, das Mittel zur Verbindung mit einem Anhänger aufweist und einen in dem Gehäuse angeordneten Abstandssensor, dadurch gekennzeichnet, dass
- der Abstandssensor eine Abweichung des Abstands zwischen Gehäuse und Zugstange von einer Neutralstellung misst und
- der Abstandssensor ein der Abstandsabweichung entsprechendes erstes elektrisches Messsignal erzeugt, wenn der Abstand zwischen Gehäuse und Zugstange gegenüber der Neutralstellung um mindestens einen ersten Abstandswert verringert ist,
- wobei die Zugstange mit einem mechanischen Auslöser zusammenwirkt, der eine der Abstandsabweichung entsprechende Auslenkung erfährt, wenn der Abstand zwischen Gehäuse und Zugstange gegenüber der Neutralstellung um mindestens einen zweiten Abstandswert verringert ist, wobei der zweite Abstandswert größer als der erste Abstandswert ist, und
- der Abstandssensor ein der Abstandsabweichung entsprechendes zweites elektrisches Messsignal erzeugt, wenn der Abstand zwischen Gehäuse und Zugstange gegenüber der Neutralstellung um einen dritten Abstandswert vergrößert ist.

Wenn der Abstand zwischen Gehäuse und Zugstange also soweit verringert ist, dass ein erster Abstandswert erreicht oder überschritten wird, erzeugt der Abstandssensor ein entsprechendes erstes elektrisches Messsignal. Weiterhin erzeugt der Abstandssensor ein zweites elektrisches Messsignal, wenn der Abstand zwischen Gehäuse und Zugstange vergrößert ist. Die elektrischen Messsignale entsprechen der jeweiligen axialen Abstandsabweichung, tragen also Informationen über das Maß der Abstandsabweichung. Das erste und das zweite elektrische Messsignal können sich insbesondere durch unterschiedliche Vorzeichen unterscheiden. Die elektrischen Messsignale können beispielsweise elektrische Spannungen sein. Wenn die Sensoreinheit mit einem Schleppfahrzeug und einem Anhänger verbunden ist, kann auf Grundlage des ersten elektrischen Messsignals der Anhänger elektrisch gebremst sowie auf Grundlage des zweiten elektrischen Messsignals beschleunigt werden. Das elektrische Bremsen kann regenerativ über einen Elektromotor des Anhängers oder weich direkt über eine direkte Bremse erfolgen. Weiterhin führt eine axiale Abstandsabweichung zwischen Gehäuse und Zugstange zur Auslenkung eines mechanischen Auslösers, wenn der Abstand zwischen Gehäuse und Zugstange gegenüber der Neutralstellung um mindestens einen zweiten Abstandswert verringert ist, wobei der zweite Abstandswert größer als der erste Abstandswert ist. Nach Erreichen bzw. Überschreiten eines zweiten Abstandswertes wird also statt oder zusätzlich zu der Erzeugung des ersten elektrischen Messsignals ein mechanischer Auslöser ausgelenkt. Wenn die Sensoreinheit mit einem Schleppfahrzeug und einem Anhänger verbunden ist, kann über die Auslenkung des mechanischen Auslösers eine direkte Bremse des Anhängers mechanisch betätigt werden. Das mechanisch betätigte Bremsen kann insbesondere ein hartes direktes Bremsen auslösen. Das harte direkte Bremsen weist einen stärkeren Anstieg der Bremskraft in Abhängigkeit der axialen Abstandsabweichung zwischen Gehäuse und Zugstange, und somit zwischen Anhänger und Schleppfahrzeug, auf als das weiche direkte Bremsen. In Abhängigkeit von dem ersten, dem zweiten elektrischen Messsignal sowie der Auslenkung des mechanischen Auslösers kann der Anhänger derart auf die Bewegung des Schleppfahrzeugs reagieren, dass der Anhänger gebremst wird, wenn sich der Abstand zwischen Gehäuse und Zugstange und damit zwischen Anhänger und Schleppfahrzeug zu stark verringert und beschleunigt wird, wenn sich der Abstand zwischen Anhänger und Schleppfahrzeug zu stark vergrößert. Über einen elektrischen Aktuator in der Sensoreinheit kann das durch den Abstandssensor erzeugte elektrische Messsignal das weiche direkte Bremsen auslösen. Auch kann die Steuerungseinheit des erfindungsgemäßen motorgetriebenen Anhängers Teil der erfindungsgemäßen Sensoreinheit sein. Durch die erfindungsgemäße Sensoreinheit kann auf Kraftmesssensoren verzichtet werden. Stattdessen erfolgt eine Messung und Regelung des Abstands zwischen Anhänger und Schleppfahrzeug über eine Abstandsmessung. Insbesondere kann die Verbindung zwischen Anhänger und Schleppfahrzeug durch den Bewegungsspielraum der Zugstange gegenüber dem Gehäuse relativ flexibel gestaltet werden. Das System Anhänger-Schleppfahrzeug ist somit weniger anfällig gegenüber lateralen Kräften zwischen Anhänger und Schleppfahrzeug.

Nach einer bevorzugten Ausgestaltung weist der Abstandssensor der Sensoreinheit einen Winkelsensor mit einem drehbar gelagerten Sensorhebel auf, der durch eine axiale Bewegung der Zugstange relativ zu dem Gehäuse aus der Neutralstellung ausgelenkt wird. Somit kann also die axiale Bewegung der Zugstange in eine Rotationsbewegung des Sensorhebels umgesetzt werden. Insbesondere kann der Sensorhebel durch die axiale Bewegung der Zugstange in entgegengesetzte Richtungen rotieren, je nachdem, ob der axiale Abstand zwischen Gehäuse und Zugstange ausgehend von der Neutralstellung vergrößert oder verringert ist. In Abhängigkeit der durch diese Rotation erreichten Winkelposition des Sensorhebels wird das der axialen Abstandsabweichung entsprechende erste elektrische Messsignal oder das zweite elektrische Messsignal erzeugt. In einer weiteren Ausgestaltung kann die Zugstange eine Verlängerung mit einem Zapfen umfassen, die in einer Nut des Sensorhebels des Abstandssensors geführt wird. Dies erlaubt eine besonders stoßarme Umsetzung der axialen Bewegung der Zugstange in die Rotationsbewegung des Sensorhebels. Auch kann die Verlängerung mit dem Zapfen zur Führung in der Nut des Sensorhebels an einem Stempel der Zugstange vorgesehen sein, wobei der Stempel an einem im Gehäuse liegenden Ende der Zugstange angeordnet sein kann. Nach einer weiteren Ausgestaltung kann die Sensoreinheit einen elektrischen Aktuator aufweisen, welcher das weiche direkte Bremsen auslöst. Auf Grundlage des vom Winkelsensor ausgehenden ersten elektrischen Messsignals kann somit der elektrische Aktuator angesteuert werden, welcher wiederum über eine mechanische Zugstrebe das direkte weiche Bremsen in Abhängigkeit der Abstandsabweichung zwischen Zugstange und Gehäuse auslöst.

Weiterhin kann nach einer bevorzugten Ausgestaltung der Auslöser der Sensoreinheit eine drehbar gelagerte Auslöserwippe aufweisen, die durch eine axiale Bewegung der Zugstange relativ zu dem Gehäuse aus einer Ruheposition auslenkbar ist. Somit kann, wenn die Abweichung des axialen Abstands zwischen Gehäuse und Zugstange den zweiten Abstandswert überschreitet, die drehbar gelagerte Auslöserwippe aus ihrer Ruheposition ausgelenkt werden. Wenn die Sensoreinheit mit einem Schleppfahrzeug und einem Anhänger verbunden ist, kann entsprechend der Auslenkung dieser Auslöserwippe wird der Anhänger gebremst werden. Insbesondere kann der Anhänger hierdurch hart direkt gebremst werden. Nach einer weiteren Ausgestaltung weist der Auslöser eine Rückstellfeder auf, welche die Auslöserwippe in die Ruheposition zurückführt, wenn die Zugstange die Auslöserwippe nicht länger auslenkt. Hierdurch wird gewährleistet, dass die Auslöserwippe stets zurück in die Ruheposition findet und somit nicht länger gebremst wird, wenn die Abweichung des axialen Abstands zwischen Gehäuse und Zugstange den zweiten Abstandswert nicht länger überschreitet.

Nach einer bevorzugten Ausgestaltung umfasst der Auslöser weiterhin eine Dämpfungseinheit, welche der Rückstellfeder entgegenwirkt und die Auslöserwippe gedämpft in die Ruheposition zurückführt, wenn die Zugstange die Auslöserwippe nicht auslenkt. Hierdurch wird gewährleistet, dass das durch die Auslenkung des mechanischen Auslösers bedingte Bremsen langsam wieder abschwächt, wenn die Zugstange die Auslöserwippe nicht mehr auslenkt. Es wird somit also das Bremsen langsam und in gedämpfter Weise beendet.

Nach einer Ausgestaltung kann die Sensoreinheit zur Messung des Abstands zwischen einem Fahrradanhänger, insbesondere einem erfindungsgemäßen motorgetriebenen Fahrradanhänger, und einem Fahrrad als Schleppfahrzeug ausgebildet sein.

Nach einer Ausgestaltung umfasst die Sensoreinheit ein Gehäuse, eine sich aus dem Gehäuse erstreckende Zugstange zur Verbindung mit der Deichsel, wobei die Zugstange gegenüber dem Gehäuse verschiebbar gelagert ist, und einen die relative Position zwischen Gehäuse und Zugstange ermittelnden Abstandssensor, wobei die Zugstange ohne eine mechanisch rückstellende Kraft in einem Normalbereich verschiebbar gehalten ist, wobei der Normalbereich über den ersten und dritten Abstandswert hinausgeht. Es kann also ein Normalbereich als normaler Betriebsbereich definiert sein, innerhalb dessen eine rückstellende Kraft auf die Zugstange bzw. deren Gehäuse nur auf Grundlage der elektrischen Messsignale, d.h. nur durch ein Bremsen bzw. Beschleunigen des Anhängers erfolgt. In diesem Normalbereich findet insbesondere keine mechanische Dämpfung statt, abgesehen von unvermeidlichen Reibungsverlusten. Die Zugstange gleitet dabei quasi widerstandslos (abgesehen von besagten Reibungsverlusten) durch das Gehäuse. Eine solche, rein elektronische Regelung ist sehr exakt. Insbesondere ergeben sich keine störenden Kopplungseffekte wie Vibrationen, da die Zugstange über den beweglichen Tragkörper völlig frei in dem Gehäuse lagert. Insbesondere können so negative Einwirkungen vorgespannter Systeme verhindert werden, die ein pulsierendes Verhalten der Sensoreinheit zur Folge hätten. Einen solchen normalen Betriebsbereich aufrecht zu erhalten ist wichtig, da eine Vielzahl von externen Störgrößen im alltäglichen Betrieb des Anhängers auftreten, wie beispielsweise unebene Straßen, wechselnde durch den Anhänger zu transportierende Lasten, schwankende Windbedingungen und unterschiedliche Fahrverhalten der Nutzer. Um eine solche exakte Regelung zu ermöglichen, ist es wichtig, die genaue Stellung des Elektromotors zu kennen. Hierzu kann der Elektromotor einen Drehgeber aufweisen, der die aktuelle Stellung des Elektromotors mit hoher Präzision ermitteln und an die Steuerungseinrichtung übermitteln kann. Auch kann eine unabhängige Radaufhängung für die Räder des Anhängers vorgesehen sein, um durch den Untergrund bedingte Vibrationen und Oszillationen zu dämpfen.

Der Normalbereich kann durch weitere Abstandswerte begrenzt sein, beispielsweise kann der Normalbereich in einer Richtung durch den zweiten Abstandswert begrenzt sein. Insbesondere kann der Normalbereich räumlich durch zwei Endanschläge begrenzt sein. Die Endanschläge können beispielsweise durch zwei Federn gebildet sein, wobei eine erste Feder eine Bewegung der Zugstange in einer ersten Richtung dämpft und eine zweite Feder die Bewegung der Zugstange in einer zweiten Richtung dämpft. Die Zugstange erfährt durch diese Federn also eine mechanische Rückstellkraft, allerdings nur außerhalb des Normalbereichs, also bei großen Beschleunigungen bzw. Verzögerungen. Im Normalbereich kommt die Zugstange mit den Federn nicht in Kontakt.

Nach einer weiteren Ausgestaltung umfasst die Sensoreinheit weiterhin mehrere mit der Zugstange verbundene Rollen und einen Teil des Gehäuses bildende, die Rollen aufnehmende Führungselemente, wobei die Zugstange über die Rollen gegenüber den Führungselementen beweglich gelagert ist. Eine solche Lagerung weist sehr geringe Reibungsverluste auf. Die Führungselemente können auf gegenüberliegenden Seiten der Zugstange angeordnet sein und beidseitig der Zugstange angeordnete Rollen aufnehmen. Insbesondere können beidseitig jeweils drei Rollen vorgesehen sein. Durch eine Vielzahl an Rollen können Kräfte und Drehmomente ausgeglichen werden, die durch ein Nachvorneneigen des Anhängers auftreten, falls sich der Massenschwerpunkt des Anhängers vom Fahrrad aus gesehen vor den Rädern des Anhängers befindet.

Nach einer weiteren Ausgestaltung umfasst der mechanische Auslöser eine Dämpfungseinheit mit einer Dämpferstange und einen mit der Zugstange verbundenen Mitnehmer, wobei der mechanische Auslöser den Anhänger bremst, indem durch eine Bewegung der Zugstange der Mitnehmer die Dämpferstange in die Dämpfungseinheit treibt. Bei einer Bremsbewegung wird die Zugstange in das Gehäuse bewegt und nimmt über den Mitnehmer die Dämpferstange der Dämpfungseinheit mit. Diese Lösung ist konstruktiv besonders einfach. Zudem kann die mechanische Bremse über die Dämpfungseinheit allmählich gelöst werden und erlaubt so eine langsame Abnahme der Bremskraft.

Ein Ausführungsbeispiel der Erfindung wird nachfolgend anhand von mehreren Figuren näher erläutert. Es zeigen
- Fig. 1: ein Schema der durch das elektrische und mechanisch betätigte Bremsen ausgelösten Bremsarten,
- Fig. 2: einen erfindungsgemäßen motorgetriebenen Anhänger mit einem Fahrrad als Schleppfahrzeug,
- Fig. 3: schematisch das erfindungsgemäße Verfahren, insbesondere den Nachlaufmodus und den Schubmodus,
- Fig. 4: ebenfalls das erfindungsgemäße Verfahren, insbesondere den Laufmodus,
- Fig. 5: die erfindungsgemäße Sensoreinheit in einer Explosionsdarstellung.
- Fig. 6.1 - 6.4: unterschiedliche Auslenkungen der Sensoreinheit aus Fig. 5,
- Fig. 7: eine weitere Darstellung der Sensoreinheit aus Fig. 5,
- Fig. 8: schematisch eine den unterschiedlichen Auslenkungen der Sensoreinheit aus Fig. 5 entsprechende Hysteresekurve,
- Fig. 9: die erfindungsgemäße Sensoreinheit gemäß einer weiteren Ausgestaltung in einer Explosionsdarstellung.
- Fig. 10.1 - 10.4: unterschiedliche Auslenkungen der Sensoreinheit aus Fig. 9,
- Fig. 11: schematisch eine den unterschiedlichen Auslenkungen der Sensoreinheit aus Fig. 9 entsprechende Hysteresekurve, und
- Fig. 12: den erfindungsgemäßen Anhänger in einer zweiten Ausgestaltung.

Soweit nicht anders angegeben, bezeichnen im Folgenden die gleichen Bezugszeichen die gleichen Gegenstände.

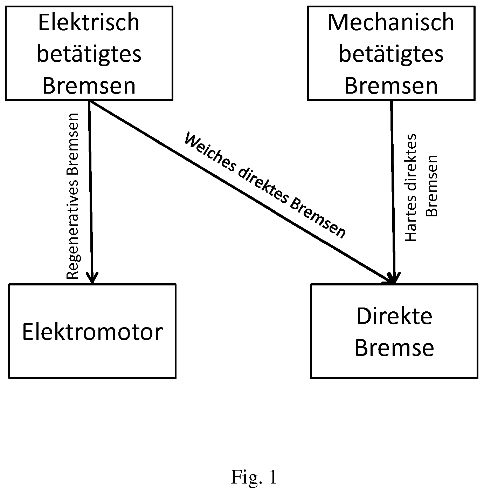

Fig. 1 zeigt ein Schema der unterschiedlichen Bremsarten. Das elektrisch betätigte Bremsen kann entweder über den Elektromotor ein regeneratives Bremsen auslösen oder über eine direkte Bremse ein weiches direktes Bremsen. Diese beiden Bremsarten können auch parallel ausgelöst werden und sich ergänzen. Das mechanisch betätigte Bremsen hingegen steuert nur die direkte Bremse an und löst somit ein hartes direktes Bremsen aus. Diese Verbindung ist rein mechanisch (oder hydraulisch).

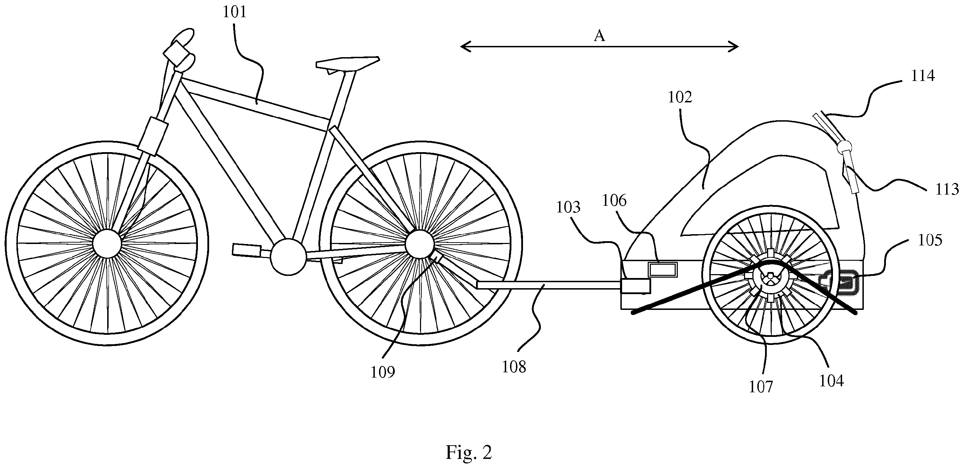

Figur 2 zeigt einen erfindungsgemäßen motorgetriebenen Anhänger 102, welcher über eine Deichsel 108 und ein Verbindungsteil 109 mit einem Fahrrad 101 verbunden ist. Der Anhänger 102 weist zwei Räder 110 auf, von denen nur eines gezeigt ist. In dem vorliegenden Ausführungsbeispiel sind die Räder über eine Achse miteinander verbunden. Grundsätzlich können die Räder jedoch auch nicht miteinander verbunden sein. Der Anhänger 102 umfasst weiterhin einen Elektromotor 104, welcher an einem der Räder 110 angeordnet ist. Es kann jedoch auch ein weiterer Elektromotor an dem anderen Rad vorgesehen sein. Auch kann der Elektromotor an der Achse angeordnet sein. Der Anhänger 102 wird von dem Elektromotor 104 angetrieben, welcher seine Energie aus der Batterie 105 bezieht. Weiterhin weist der Anhänger 102 eine Steuerungseinheit 106 auf, welche den Elektromotor 104 sowie an einem der Räder 110 angeordnete Bremse 107 ansteuert.

Es können jedoch auch an beiden Rädern 110 oder an der Radachse Bremsen vorgesehen sein und angesteuert werden. Eine mit der Deichsel 108 verbundene Sensoreinheit 103 ist an bzw. innerhalb des Anhängers 102 angeordnet. Die Sensoreinheit 103 misst eine eventuelle Abweichung des Abstands zwischen Fahrrad 101 und Anhänger 102 in axialer Richtung A ausgehend von einer zuvor definierten Neutralstellung. In axialer Richtung bedeutet entlang einer gedachten Verbindungslinie zwischen Fahrrad und Anhänger. Die Sensoreinheit 103 ein auf der Abstandsabweichung basierendes Messsignal an die Steuerungseinheit 106. In Abhängigkeit von dem von der Sensoreinheit 103 ausgegebenen Messsignal kann die Steuerungseinheit 106 den Elektromotor 104 bzw. die Bremsen 107 ansteuern und so den Anhänger relativ zu dem Fahrrad zu beschleunigen oder abzubremsen.

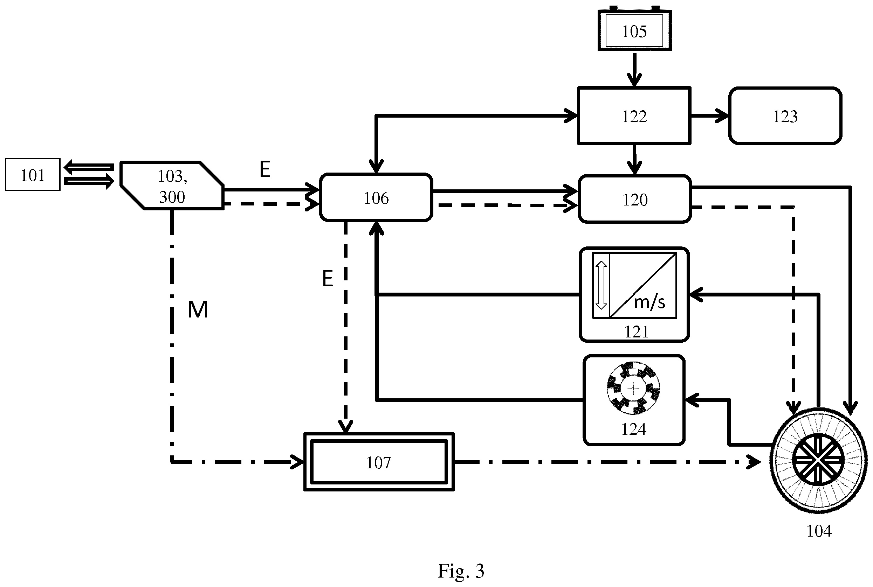

Figur 3 zeigt schematisch das erfindungsgemäße Verfahren im Zusammenhang mit den Komponenten des erfindungsgemäßen motorgetriebenen Anhängers. Die Sensoreinheit 103, 300 kann beispielsweise wie in Fig. 2 gezeigt in oder an dem Anhänger 102 angeordnet sein. Alle weiteren dargestellten Gegenstände sind in bevorzugter Weise an oder in dem Anhänger angeordnet. Die Steuerungseinheit 106 kann jedoch auch Teil der Sensoreinheit 103, 300 sein. Die Steuerungseinheit 106 ist über die Verbindungen E elektrisch mit der Sensoreinheit 103, 300 und der Bremseinheit 107 verbunden. Die Steuerungseinheit 106 empfängt elektrische Messsignale von der Sensoreinheit 103, 300, verarbeitet diese und übermittelt sie an die Motorsteuerung 120. Der Signalverlauf ist durch die durchgezogene Pfeillinie bzw. die gestrichelte Pfeillinie dargestellt. Über die Motorsteuerung 120 wird schließlich der Elektromotor 104 angesteuert. Zudem steht die Steuerungseinheit 106 mit einer Leistungssteuerung 122 in Verbindung. Über die Leistungssteuerung kann elektrische Energie aus einer Batterie 105 über die Motorsteuerung an den Elektromotor 104 geführt und der Elektromotor 104 somit angetrieben werden. Grundsätzlich kann anstelle oder zusätzlich zu der Batterie auch ein anderer Energiespeicher vorgesehen sein. Weiterhin ist eine Verbrauchersteuerung 123 mit der Leistungssteuerung 122 verbunden. Über die Verbrauchersteuerung kann beispielsweise ein oder mehrere Fahrradlichter betrieben werden. Eine Bremseinheit 107 empfängt ebenfalls elektrische Messsignale von der Sensoreinheit 103, 300. Die Bremseinheit 107 kann beispielsweise eine oder mehrere an einem der Räder 110 oder an der Radachse angeordnete, nicht dargestellte, Bremsen aufweisen. Die Bremseinheit 107 ist über eine elektrische Verbindung E mit der Steuerungseinheit 106 und über eine mechanische Verbindung M mit der Sensoreinheit 103, 300 verbunden. Zudem kann ein mit dem Elektromotor 104 verbundener Drehgeber 124 vorgesehen sein. Der Drehgeber 124 kann beispielsweise in den Elektromotor 124 integriert sein.

Die Sensoreinheit 103, 300 ist dazu ausgebildet, zwischen Fahrrad und Anhänger in Axialrichtung auftretende Abstandsabweichungen zu messen und der Abstandsabweichung entsprechende elektrische Messsignale zu erzeugen. Diese Abstandsabweichungen werden in Abhängigkeit eines zuvor als Neutralstellung definierten axialen Abstands zwischen Anhänger und Fahrrad gemessen. Wenn das Fahrrad gebremst wird, verringert sich der Abstand zwischen Fahrrad und Anhänger und es tritt eine Abstandsabweichung in Axialrichtung auf. Die Sensoreinheit 103, 300 erzeugt ein dieser Abstandsabweichung entsprechendes erstes elektrisches Messsignal, wenn der Abstand zwischen Anhänger und Fahrrad gegenüber der Neutralstellung um mindestens einen ersten Abstandswert verringert ist. Das erste elektrische Messsignal wird an die Steuerungseinheit 106 gesendet, welche daraufhin über die Motorsteuerung 120 den Elektromotor 104 als Generator betreibt und den Anhänger regenerativ bremst. Der Signalverlauf ist durch die gestrichelte Pfeillinie gekennzeichnet. Hierbei kann über den Elektromotor 104 generatorisch zurückgewonnene Bremsenergie über die Leistungssteuerung 122 in die Batterie 105 zurückgeführt werden. Auch kann die Steuerungseinheit 106 auf Grundlage des ersten elektrischen Messsignals über eine elektrische Verbindung E die Bremseinheit 107 und somit die direkten Bremsen elektrisch ansteuern, um weich direkt zu bremsen.

Sollte sich der Abstand zwischen Fahrrad 101 und Anhänger 102 jedoch gegenüber der Neutralstellung um mindestens einen zweiten Abstandswert verringern, wobei der zweite Abstandswert größer als der erste Abstandswert ist, so wird ein mechanischer Auslöser der Sensoreinheit 103, 300 ausgelenkt. Auf Grundlage dieser Auslenkung wird über die mechanische Verbindung M die Bremseinheit 107 angesteuert und es werden direkte Bremsen der Bremseinheit 107 ausgelöst. Insbesondere wird somit hart direkt gebremst. Die mechanische Verbindung M kann jedoch auch eine hydraulische Verbindung sein, so dass die direkten Bremsen der Bremseinheit 107 hydraulisch ausgelöst werden. Die mechanische Informationsübertagung ist in Figur 3 durch die gestrichelt-gepunktete Pfeillinie dargestellt. Auch kann über die Bremseinheit 107 ein Signal an den Elektromotor 104 gesendet werden, beispielsweise um bei einer Störung der Steuerungseinheit 106 den Elektromotor 104 zu stoppen. Zusätzlich zu dem zweiten Messsignal kann auch das erste elektrische Messsignal, welches das regenerative Bremsen auslöst, über die Steuerungseinheit 106 und die Motorsteuerung 120 an den Elektromotor 104 weitergeleitet werden. Es ist somit möglich, regenerativ und direkt gleichzeitig zu bremsen.

Wenn das Fahrrad beschleunigt wird, sodass sich der Abstand zwischen Anhänger und Fahrrad gegenüber der Neutralstellung vergrößert, so erzeugt die Sensoreinheit 103, 300 ein entsprechendes zweites elektrisches Messsignal. Dieses zweite elektrische Messsignal wird an die Steuerungseinheit 106 übermittelt, welche über die Motorsteuerung 120 den Elektromotor 104 beschleunigen lässt. Der Signalverlauf ist durch die durchgezogene Pfeillinie gekennzeichnet. Der Betrag des von der Sensoreinheit erzeugten zweiten elektrischen Messsignals hängt davon ab, wie stark der ermittelte Abstand zwischen Anhänger und Fahrrad von der Neutralstellung abweicht. Aufgrund des zweiten elektrischen Messsignals wird über die Steuerungseinheit 106 die Motorsteuerung 120 und darüber der Elektromotor 104 derart angesteuert, dass der Anhänger 102 beschleunigt wird bis der Abstand zwischen Anhänger und Fahrrad wieder die Neutralstellung erreicht.

In Abhängigkeit der Definition der Neutralstellung kann der Anhänger im Nachlaufmodus oder im Schubmodus betrieben werden. Im Nachlaufmodus ist die Neutralstellung, und damit der Abstand zwischen Anhänger und Fahrrad, so definiert, dass der Anhänger dem Fahrrad nachläuft, ohne eine spürbare Last zu bilden. Im Schubmodus ist die Neutralstellung so definiert, dass der Anhänger in der Neutralstellung stets eine Schubkraft auf das Fahrrad ausübt.

Zudem ist ein Geschwindigkeitssensor 121 in Figur 3 gezeigt. Der Geschwindigkeitssensor 121 misst die Geschwindigkeit des Anhängers und wirkt beispielsweise mit dem Elektromotor 104 und/oder mit den Rädern 110 und/oder der Achse 111 des Anhängers zusammen. Die gemessene Geschwindigkeit wird vom Geschwindigkeitssensor 121 an die Steuerungseinheit 106 übermittelt. In Abhängigkeit der vom Geschwindigkeitssensor gemessenen Geschwindigkeit können Nachlaufmodus und/oder Schubmodus aktiviert werden. Beispielsweise ist es möglich, bei hohen Geschwindigkeiten, welche unter anderem bei einer Bergabfahrt auftreten können, den Schubmodus zu deaktivieren und bei einer Bergauffahrt zu aktivieren. Um zu ermitteln, ob bergauf oder bergab gefahren wird, kann alternativ oder zusätzlich ein nicht gezeigter Neigungssensor vorgesehen sein.

Der Drehgeber 124 kann die aktuelle Stellung des Elektromotors 104 mit hoher Präzision ermitteln und verbessert so die erfindungsgemäße Regelung durch eine präzisere Kontrolle des Elektromotors 104. Insbesondere aus dem Stillstand startende Bewegungen können so besser kontrolliert werden. Eine präzise Steuerung des Elektromotors 104 ist vor allem bei der weiter unten erläuterten Ausgestaltung der Sensoreinheit von großer Bedeutung.

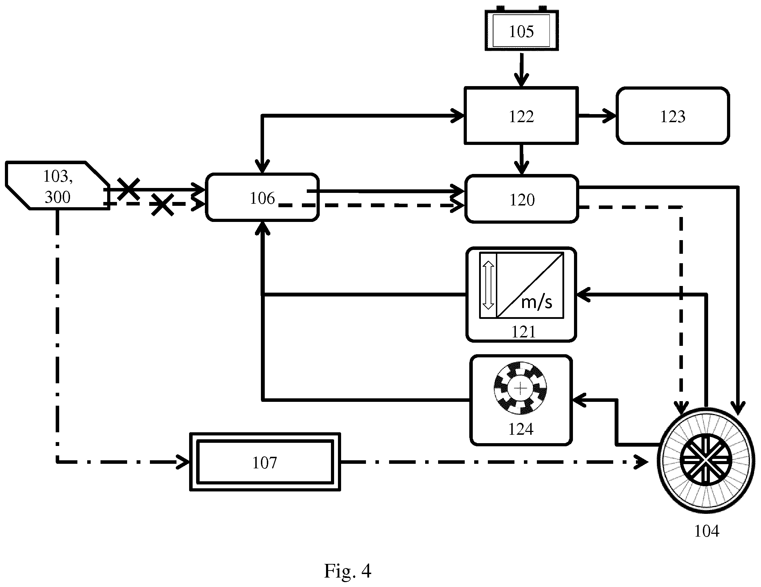

Figur 4 unterscheidet sich von Figur 3 dadurch, dass der erfindungsgemäße Anhänger nun im Laufmodus betrieben wird. Der Laufmodus kann beispielsweise aktiviert werden, wenn die Sensoreinheit 103 gemeinsam mit der Deichsel 108 vom Fahrrad gelöst wird. Der Anhänger 102 kann dann von einer Bedienperson von hinten über Griffflächen 113 geschoben werden. Im Laufmodus erhält die Steuerungseinheit 106 keine Messsignale von der Sensoreinheit 103 bzw. ignoriert die Signale, welche sie von der Sensoreinheit 103 erhält. Stattdessen empfängt die Steuerungseinheit 106 die Messsignale des Geschwindigkeitssensors 121 und steuert den Elektromotor 104 derart an, dass eine einmal erreichte Geschwindigkeit des Anhängers aufrechterhalten wird. Hierdurch wird es der Bedienperson erleichtert, den Anhänger zu schieben, insbesondere bei hoher Steigung. Über eine Handbremse 114 kann der Anhänger durch die Bedienperson gebremst werden (siehe Fig. 2). Es können weitere nicht dargestellte Sensoren vorgesehen sein, welche die Bremsen des Anhängers auslösen, sobald die Bedienperson sich von dem Anhänger entfernt.

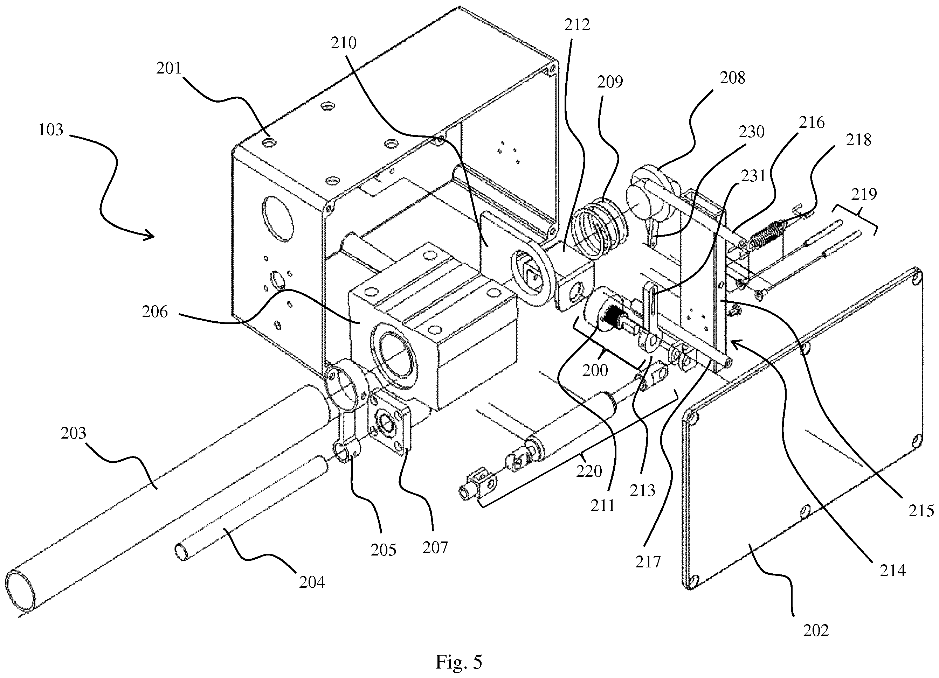

Figur 5 zeigt eine erste Ausgestaltung der erfindungsgemäßen Sensoreinheit 103 in einer Explosionsdarstellung. Die Sensoreinheit umfasst ein Gehäuse 201 mit einer abnehmbaren Seitenfläche 202 und einer Öffnung in dem Gehäuse 201 für eine Zugstange 203 zur Verbindung mit einem Fahrrad. Die gezeigte Sensoreinheit kann direkt an dem Anhänger 102 oder an der Deichsel 108 angebracht werden. Weiterhin ist parallel zu der Zugstange 203 eine Ausgleichsstange 204 angeordnet, welche die Verbindung zwischen Anhänger und Fahrrad senkrecht zur Axialrichtung stärkt. Insbesondere können somit Kräfte und Drehmomente ausgeglichen werden, die durch ein Nachvorneneigen des Anhängers auftreten, falls sich der Massenschwerpunkt des Anhängers vom Fahrrad aus gesehen vor den Rädern des Anhängers befindet. Zugstange 203 und Ausgleichsstange 204 sind über ein gemeinsames Verbindungsstück 205 sowie über die Halterungen 206 und 207 mit dem Gehäuse 201 verbunden. Sowohl Zugstange 203 als auch Ausgleichsstange 204 sind in Axialrichtung entlang der Verbindungslinie zwischen Fahrrad und Anhänger beweglich. Die Zugstange 203 weist an ihrem im Gehäuse 201 liegenden Ende einen Stempel 208 und eine Spiralfeder 209 sowie einen Federsitz 210 zur einseitigen Befestigung der Spiralfeder 209 auf. Der Stempel 208 verfügt über eine Verlängerung 230 mit einem Zapfen, der in eine Nut 231 eines Sensorhebels 213 eingreift. Der Sensorhebel 213 und ein Winkelsensor 211 sind Teil eines Abstandssensors 200, welcher über eine Montageplatte 212 mit dem Gehäuse 201 verbunden ist. Der Winkelsensor 211 ist in nicht dargestellter Weise mit der Steuerungseinheit 106 des Anhängers verbunden.

Bei Bezugszeichen 214 ist ein Auslöser dargestellt, der eine Auslöserwippe 215, einen Anschlag 216, eine Rückstellfeder 218 sowie eine Dämpfungseinheit 220 umfasst. Über Verbindungselemente 219 ist der Auslöser 214 mit der Bremseinheit 107 des Anhängers verbunden.

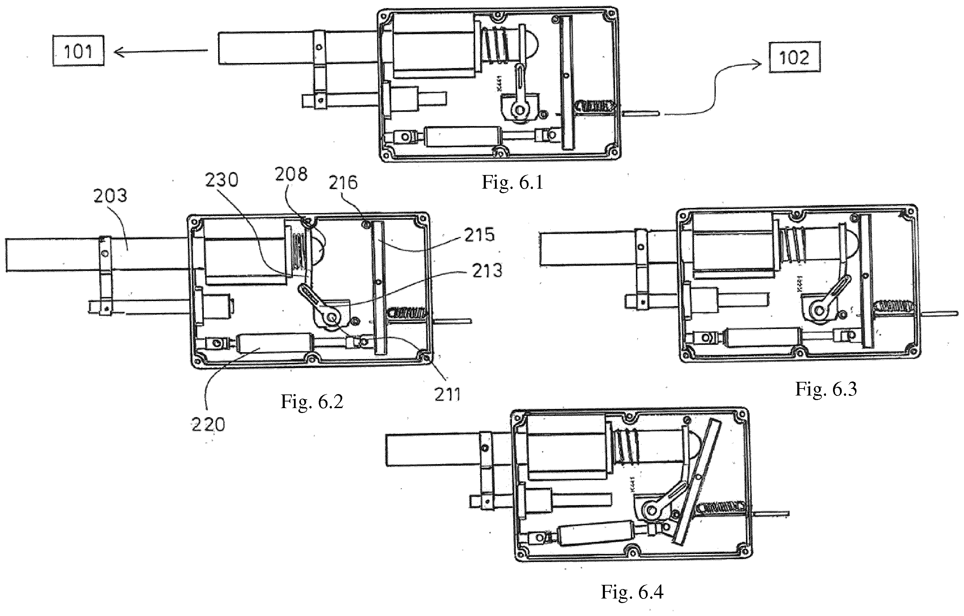

Als erstes wird ein bestimmter Abstand zwischen Fahrrad 101 und Anhänger 102 Neutralstellung definiert. In Figur 6.1 ist die Sensoreinheit in der Neutralstellung gezeigt. Wird nun im Fahrbetrieb das Fahrrad beschleunigt, so vergrößert sich der Abstand zwischen Fahrrad und Anhänger und die Zugstange 203 wird gemeinsam mit der Ausgleichsstange 204 ein Stück weit aus dem Gehäuse 201 gezogen. Diese Bewegung der Zugstange 203 lässt über die Feder 230 des Stempels 208 den Sensorhebel 213, wie in Figur 6.2 gezeigt, nach links rotieren. Es wird somit die Translationsbewegung der Zugstange 203 in eine Rotationsbewegung des Sensorhebels 213 und damit des Winkelsensors 211 umgesetzt. Der Winkelsensor 211 übermittelt ein der Auslenkung entsprechendes (zweites) elektrisches Messsignal an die Steuerungseinheit 106 des Anhängers. Auf Grundlage des Messsignals steuert die Steuerungseinheit 106 über die Motorsteuerung 120 dementsprechend den Elektromotor 104 an, um den Anhänger zu beschleunigen. Der Anhänger wird im Wesentlichen so lange beschleunigt, bis der Sensorhebel wieder die Neutralstellung erreicht.

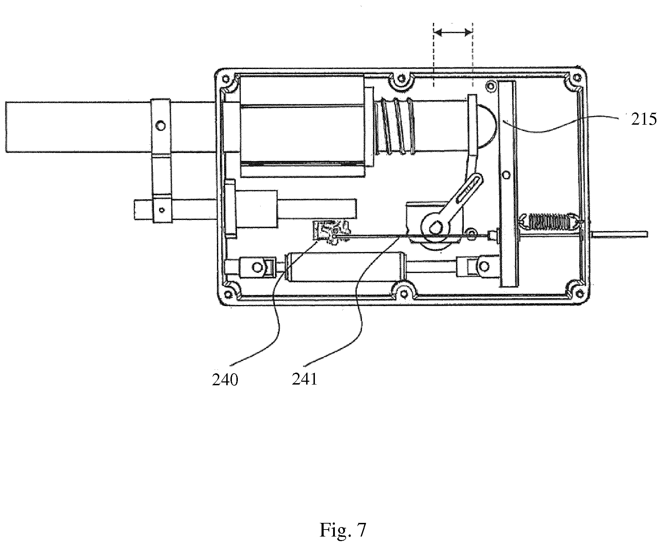

Wird das Fahrrad 101 abgebremst, so wird der Abstand zwischen Fahrrad 101 und Anhänger 102 verringert. Die Zugstange 203 und die Ausgleichsstange 204 dringen weiter in das Gehäuse ein und die Zugstange 203 schiebt über den Stempel 208 und Feder 230 den Sensorhebel 213 nach rechts. Dies ist in Figur 6.3 sowie in Figur 7 dargestellt. Der Winkelsensor 211 erzeugt ein der Auslenkung entsprechendes (erstes) elektrisches Messsignal, welches an die Steuerungseinheit 106 übermittelt wird und über den Elektromotor 104 den Anhänger regenerativ bremst oder über die Bremseinheit 107 den Anhänger weicht direkt bremst. Auch kann die Sensoreinheit einen elektrischen Aktuator 240 aufweisen, welcher das weiche direkte Bremsen auslöst (Figur 7). Auf Grundlage des vom Winkelsensor 211 ausgehenden ersten elektrischen Messsignals kann somit der elektrische Aktuator 240 angesteuert werden, welcher wiederum über eine mechanische Zugstrebe 241 das direkte weiche Bremsen in Abhängigkeit der Abstandsabweichung zwischen Zugstange und Gehäuse auslöst. In dem gezeigten Ausführungsbeispiel ist die Zugstrebe 241 durch die Auslöserwippe 215 geführt.

Verringert sich der Abstand zwischen Fahrrad und Anhänger damit zwischen Gehäuse und Zugstange weiter, so betätigt der Stempel 208 der Zugstange 203 die Auslöserwippe 215 des Auslösers 214, wie in Figur 6.4 dargestellt. Durch das Auslenken der Auslöserwippe 215 werden die direkten Bremsen der Bremseinheit 107 des Anhängers derart ausgelöst, dass hart direkt gebremst wird.

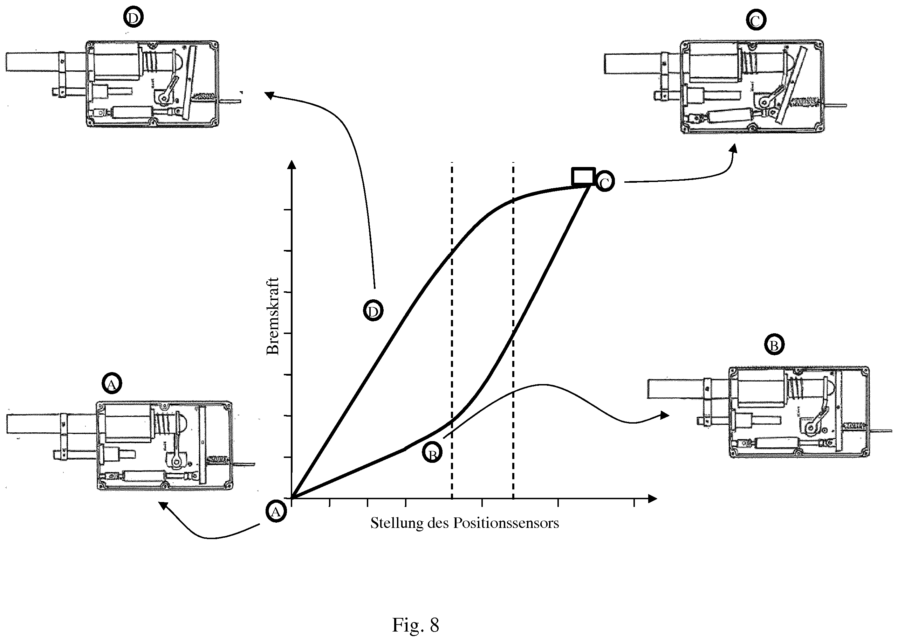

In Figur 8 ist der Bremsvorgang mit der erfindungsgemäßen Sensoreinheit dargestellt. Das Diagramm zeigt auf der Ordinatenachse die Bremskraft und auf der Abszissenachse die Stellung des Winkelsensors. Mit den Buchstaben a-d sind unterschiedliche Auslenkungen des Winkelsensors veranschaulicht. Bei Buchstabe a) befindet sich der Winkelsensor in der Neutralstellung. Der Winkelsensor ist nicht ausgelenkt und es folgt daher auch keine Bremskraft. Verringert sich nun der Abstand zwischen Fahrrad und Anhänger und damit zwischen Zugstange und Gehäuse, wird der Winkelsensor nach rechts ausgelenkt, wie bei Buchstabe b) dargestellt. Innerhalb dieses Bereichs gibt der Winkelsensor das erste elektrische Messsignal aus, wodurch das regenerative Bremsen und/oder das weiche direkte Bremsen ausgelöst wird Je weiter der Abstand zwischen Anhänger und Fahrrad sinkt, desto stärker wird regenerativ und/oder weich direkt gebremst. Verringert sich der Abstand zwischen Anhänger und Fahrrad weiter, so wird wie bei Buchstabe c) dargestellt, die Auslöserwippe betätigt. Sobald die Auslöserwippe betätigt und somit der Auslöser ausgelenkt wird, werden die direkten Bremsen hart ausgelöst. In dem vorliegenden Beispiel wird in diesem Fall nicht länger regenerativ gebremst. Je weiter der Abstand zwischen Anhänger und Fahrrad sinkt, desto stärker wird nun hart direkt gebremst.

Aufgrund des Bremsvorgangs nähert sich der Abstand zwischen Fahrrad und Anhänger wieder der Neutralstellung an. Die Zugstange und ihr Stempel entfernen sich somit von der Auslöserwippe, welche daraufhin wieder in ihre Ruheposition zurückschwingt. Aufgrund der Dämpfungseinheit des Auslösers geschieht dies allerdings relativ langsam. Das Abklingen des harten direkten Bremsvorgangs ist somit gedämpft, was sich in der Hysteresekurve durch eine langsame Abnahme der Bremskraft mit abnehmender Auslenkung der Sensorposition wiederspiegelt (gedämpftes direktes Bremsen). Nähert sich der Abstand zwischen Fahrrad und Anhänger weiter der Neutralstellung an, so wird zudem auch wieder regenerativ gebremst. Dies ist bei Buchstabe d) dargestellt. Sobald die Auslöserwippe wieder ihre Ruheposition erreicht, wird ausschließlich regenerativ und/oder weich direkt über die Steuerungseinheit gebremst. Der Bremsvorgang endet, sobald wieder die Neutralstellung erreicht ist.

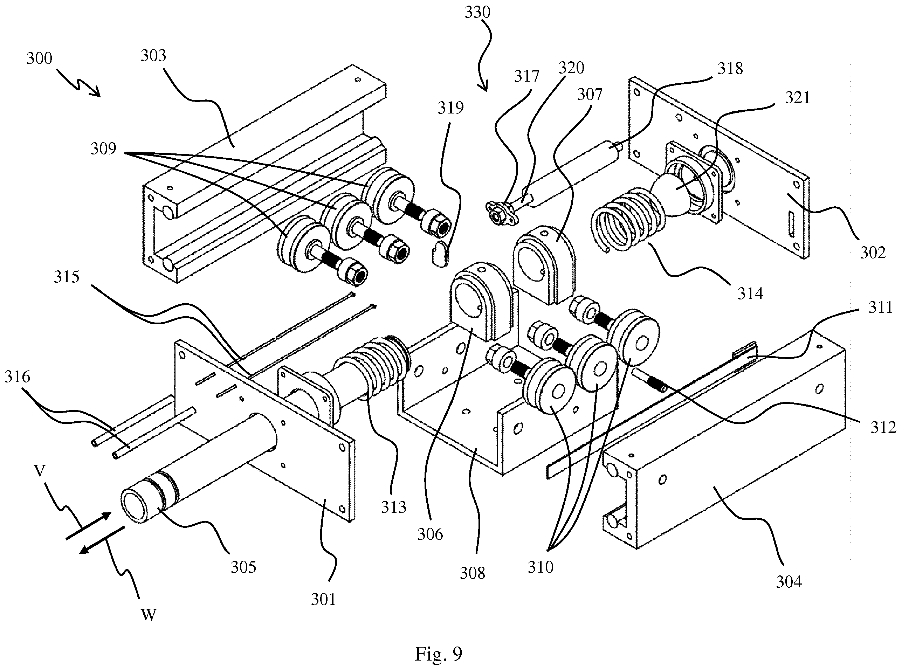

Figur 9 zeigt eine Sensoreinheit 300 gemäß einer alternativen Ausgestaltung. Die Sensoreinheit 300 umfasst eine Frontplatte 301, eine Rückplatte 302 sowie Seitenelemente 303, 304. Weiterhin können nicht dargestellte obere und untere Abdeckungen Teil des Gehäuses sein. Die Frontplatte 301 verfügt über eine Öffnung für eine Zugstange 305 zur Verbindung mit einem Fahrrad. Die Zugstange 305 kann mit der Deichsel 108 verbunden sein oder einen Teil dieser bilden. Die Sensoreinheit 300 kann direkt an dem Anhänger 102 oder an der Deichsel 108 angebracht werden. Weiterhin ist die Zugstange 305 über ein erstes Ankerstück 306 und ein zweites Ankerstück 307 fest mit einem C-förmigen Tragkörper 308 verbunden. Jeweils drei Rollen 309, 310 sind beidseitig des Tragkörpers 308 angeordnet. Über die Rollen 309, 310 lagert der Tragkörper 308 und somit die mit dem Tragkörper 308 verbundene Zugstange 305 an den Seitenelementen 303, 304. Durch die Vielzahl an Rollen 309, 310 können Kräfte und Drehmomente ausgeglichen werden, die durch ein Nachvorneneigen des Anhängers auftreten, falls sich der Massenschwerpunkt des Anhängers vom Fahrrad aus gesehen vor den Rädern des Anhängers befindet. Die Seitenelemente 303, 304 sind wiederum mit dem Anhänger verbunden.

An dem Seitenelement 304 ist ein Sensorstreifen 311 eines Linearpotentiometers angebracht, während dem Sensorstreifen 311 gegenüberliegend ein mit dem Tragkörper 308 verbundenes Sensorelement 312 angeordnet ist. Der Sensorstreifen kann natürlich auch in dem Seitenelement 303 angeordnet sein. Auch könnte der Sensorstreifen mit dem Tragkörper verbunden und das Sensorelement an einem der Seitenelemente angeordnet sein. Federn 313, 314 umgreifen die Zugstange 305 und sind über Halterungen an der Frontplatte 301 bzw. an der Rückplatte 302 befestigt. Die Feder 314 verfügt zudem über einen Federdämpfer 321. Zudem ist ein mechanischer Auslöser 330 für die mechanische Bremse vorgesehen, der zumindest Zugkabel 315, eine Dämpfungseinheit 318 und einen Mitnehmer 319 umfasst. Die Zugkabel 315 sind mit einem Ende über Kabelhülsen 316 an der Frontplatte 301 gelagert und mit ihrem anderen Ende über ein Verbindungsstück 317 mit einer Dämpferstange 320 der Dämpfungseinheit 318 verbunden. Die Dämpfungseinheit 318 ist an der Rückplatte 302 befestigt, der Mitnehmer an dem Tragkörper 308.

Die Zugstange 305 kann in Axialrichtung A entlang der Verbindungslinie zwischen Fahrrad und Anhänger bewegt werden. Bei einer Relativbewegung zwischen Fahrrad und Anhänger bewegt sich die Zugstange 305 entlang ihrer Längsachse in Richtung V oder W, indem sie gemeinsam mit dem Tragkörper 308 mittels der Rollen 309, 310 entlang der Seitenelemente 303, 304 gleitet. Die Relativbewegung zwischen Fahrrad und Anhänger entspricht also einer Relativbewegung zwischen Zugstange 305 und dem Sensorgehäuse, insbesondere den Seitenelementen 303, 304. Bei einem Bremsvorgang verringert sich der Abstand zwischen Fahrrad und Anhänger, was zu einer Bewegung der Zugstange 305 in das Gehäuse hinein entlang der mit V gekennzeichneten Richtung führt. Bei einer Beschleunigung vergrößert sich der sich der Abstand zwischen Fahrrad und Anhänger, wodurch die Zugstange 305 aus dem Gehäuse hinaus entlang der mit W gekennzeichneten Richtung bewegt wird. Bei einer solchen Bewegung der Zugstange 305 bewegt sich das mit dem Tragkörper 308 verbundene Sensorelement 312 entlang des Sensorstreifens 311. Abhängig von der Relativstellung zwischen Sensorstreifen 311 und Sensorelement 312 (und somit von dem Abstand zwischen Fahrrad und Anhänger) wird ein elektrisches Messsignal erzeugt. Dieses wird an die Steuerungseinheit 106 übermittelt, welche in oben beschriebener Weise eine Regelung durchführt.

Im normalen Betriebsbereich, also bei mäßigen Beschleunigungen und Verzögerungen, bewegt sich die Zugstange 205 mechanisch im Wesentlichen ungedämpft entlang ihrer Längsachse. Ungedämpft bedeutet hierbei, dass keine zusätzlichen mechanischen Dämpfungsmechanismen vorgesehen sind, die Zugstange 205 also ohne eine mechanisch rückstellende Kraft in einem Normalbereich verschiebbar gehalten ist. Die Zugstange gleitet über den Tragkörper frei innerhalb des Gehäuses. Eine Regelung der Bewegung der Zugstange 305 bzw. des die Zugstange 305 aufnehmenden Gehäuses erfolgt lediglich auf Grundlage der elektrischen Messsignale durch eine Relativbewegung zwischen Gehäuse und Zugstange. Die Federn 313, 314 dienen lediglich dem Abfedern einer Bewegung der Zugstange 305 bei besonders starken Auslenkungen. Im normalen Betriebsbereich kommt die Zugstange 305 mit den Federn 313, 314 nicht in Kontakt. Eine solche, rein elektronische Regelung ist sehr exakt. Insbesondere ergeben sich keine störenden Kopplungseffekte wie Vibrationen, da die Zugstange über den beweglichen Tragkörper völlig frei in dem Gehäuse lagert. Um eine solch exakte Regelung zu ermöglichen, ist es wichtig, die genaue Stellung des Elektromotors zu kennen. Hierzu dient der erwähnte Drehgeber 124. Dieser kann die aktuelle Stellung des Elektromotors 104 mit hoher Präzision ermitteln und verbessert so die erfindungsgemäße Regelung durch eine präzisere Kontrolle des Elektromotors 104.

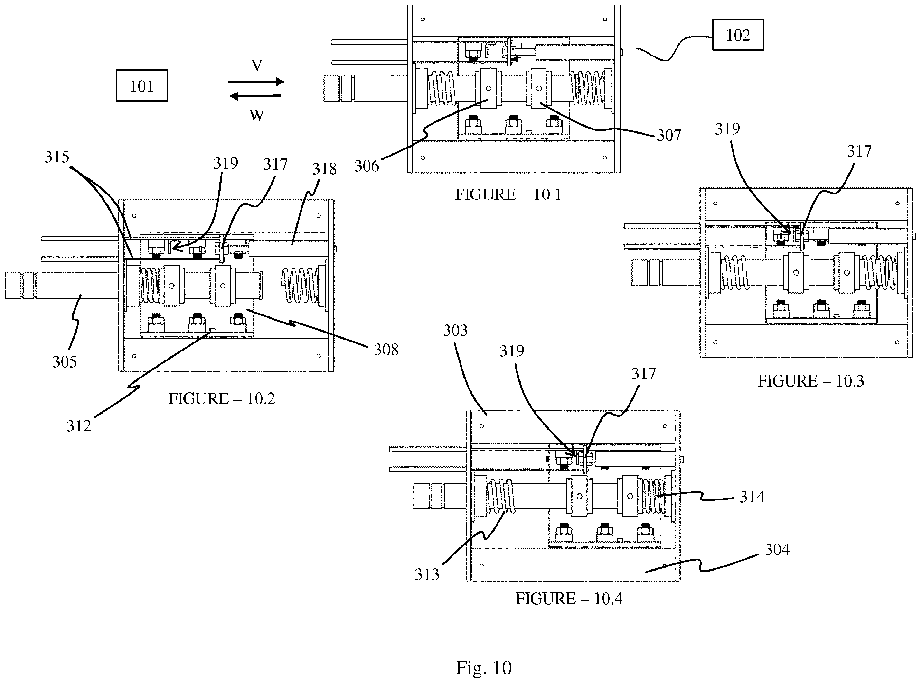

In Figur 10 sind unterschiedliche Stellungen der Sensoreinheit aus Fig. 9 dargestellt. Zunächst wird ein bestimmter Abstand zwischen Fahrrad 101 und Anhänger 102 als Neutralstellung definiert. In Figur 10.1 ist die Sensoreinheit in der Neutralstellung gezeigt.

Der Beschleunigungsvorgang ist in Figur 10.2 zu erkennen. Wird das Fahrrad beschleunigt, vergrößert sich der Abstand zwischen Fahrrad und Anhänger und die Zugstange 305 wird entlang der Richtung W aus dem Gehäuse gezogen. Der Abstand zwischen Anhänger und Fahrrad wird hierdurch zumindest um den dritten vorbestimmten Abstandswert vergrößert. Gemeinsam mit der Zugstange 305 bewegt sich der Tragkörper 308, indem die Rollen 309, 310 entlang der Seitenelemente 303, 304 gleiten. Die Rollen 309, 310 sind in den Figuren 10 in den Seitenelementen 303, 304 aufgenommen und daher nicht erkennbar. Über den Tragkörper 308 wird das Sensorelement 312 des Linearpotentiometers entlang des Sensorstreifens 311 bewegt. Der Sensorstreifen 311 ist in den Figuren 10 in dem Seitenelement 304 aufgenommen und daher nicht erkennbar. Das Linearpotentiometer übermittelt ein der Auslenkung entsprechendes elektrisches Messsignal an die Steuerungseinheit 106 des Anhängers 102. Auf Grundlage des Messsignals steuert die Steuerungseinheit 106 über die Motorsteuerung 120 dementsprechend den Elektromotor 104 an, um den Anhänger 102 zu beschleunigen. Der Anhänger wird im Wesentlichen so lange beschleunigt, bis das Linearpotentiometer wieder das Erreichen der Neutralstellung anzeigt. In der Darstellung in Fig. 10.2 wurde das Fahrrad so stark beschleunigt, dass das erste Ankerstück 306 mit der Feder 313 in Kontakt tritt. Die Feder 313 liegt, wie auch die Feder 314, außerhalb des Normalbereichs und erlaubt eine zusätzliche mechanische Federung zur Stoßminderung bei starken Beschleunigungen/Bremsvorgängen.

Wird das Fahrrad 101 abgebremst, so wird der Abstand zwischen Fahrrad 101 und Anhänger 102 verringert. Die Zugstange 305 dringt weiter in das Gehäuse ein und bewegt den Tragkörper 308 und somit das Sensorelement 311 entlang der Richtung V. Dies ist in Figur 10.3 dargestellt. Es wird somit der Abstand zwischen Fahrrad und Anhänger um den vorbestimmten ersten Abstandswert verringert. Das Linearpotentiometer erzeugt ein der Abweichung von der Neutralstellung entsprechendes elektrisches Messsignal, welches an die Steuerungseinheit 106 übermittelt wird. Dies führt über den Elektromotor 104 zu einem regenerativen Bremsen des Anhängers 102 oder über die Bremseinheit 107 zu einem weichen direkten Bremsen des Anhängers 102.

Verringert sich der Abstand zwischen Fahrrad und Anhänger und damit zwischen Gehäuse und Zugstange 305 weiter, tritt das Ankerstück 307 mit der Feder 314 in Kontakt und wird somit mechanisch gedämpft. Bei starken Bremsvorgängen überwindet die Zugstange 305 die Federkraft der Feder 314. Hierbei tritt der mit dem Tragkörper 308 verbundene Mitnehmer 319 mit dem Verbindungsstück 317 in Kontakt und schiebt dabei die Dämpferstange 320 in das Dämpfungselement 318. Dies ist in Figur 10.4 dargestellt. Hierdurch wird das mechanische Bremsen, also die direkten Bremsen der Bremseinheit 107 des Anhängers derart ausgelöst, dass hart direkt gebremst wird.

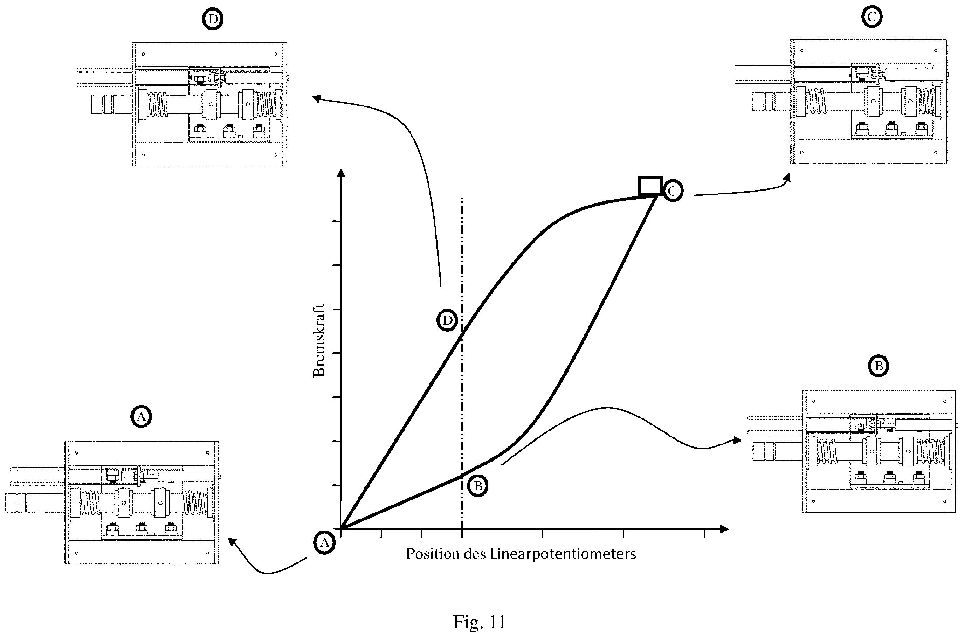

In Figur 11 ist der Bremsvorgang als Hysteresekurve mit der Sensoreinheit aus Figur 9 dargestellt. Das Diagramm zeigt auf der Ordinatenachse die Bremskraft und auf der Abszissenachse die Stellung des Linearpotentiometers. Mit den Buchstaben a-d sind unterschiedliche Positionen des Linearpotentiometers veranschaulicht. Bei Buchstabe a) befindet sich das Linearpotentiometer in der Neutralstellung. Folglich liegt die Bremskraft bei null. Verringert sich nun der Abstand zwischen Fahrrad und Anhänger und damit zwischen Zugstange und Gehäuse, verschiebt sich das Sensorelement 312 entlang des Sensorstreifens 311. Das Linearpotentiometer misst somit eine Abstandsabweichung wodurch eine ansteigende Bremskraft erzeugt wird, wie bei Buchstabe b) dargestellt. Innerhalb dieses Bereichs gibt das Linearpotentiometer das erste elektrische Messsignal aus, wodurch das regenerative Bremsen und/oder das weiche direkte Bremsen ausgelöst wird. Je weiter der Abstand zwischen Anhänger und Fahrrad sinkt, desto stärker wird regenerativ und/oder weich direkt gebremst. Verringert sich der Abstand zwischen Anhänger und Fahrrad weiter, so wird wie bei Buchstabe c) dargestellt, die mechanische Bremse betätigt. Wie oben erläutert, wird dann über den Mitnehmer 319 die Dämpferstange 320 in das Dämpfungselement 318 getrieben und es werden die direkten Bremsen hart ausgelöst. In dem vorliegenden Beispiel wird dann nicht länger regenerativ gebremst. Je weiter der Abstand zwischen Anhänger und Fahrrad sinkt, desto stärker wird nun hart direkt gebremst.

Aufgrund des Bremsvorgangs nähert sich der Abstand zwischen Fahrrad und Anhänger wieder der Neutralstellung an. Die Zugstange bewegt sich wieder aus dem Gehäuse hinaus. Hierbei löst sich der Mitnehmer 319 von dem Verbindungsstück 317, da die Dämpferstange 320 sich nur langsam aus dem Dämpfungselement 318 hinaus bewegt. Aufgrund des Dämpfungselements 318 lässt das mechanische Bremsen nur allmählich nach, d.h. das Abklingen des harten direkten Bremsvorgangs erfolgt gedämpft, was sich in der Hysteresekurve durch eine langsame Abnahme der Bremskraft mit abnehmender Auslenkung der Sensorposition wiederspiegelt. Nähert sich der Abstand zwischen Fahrrad und Anhänger weiter der Neutralstellung an, so wird zudem auch wieder regenerativ gebremst. Dies ist bei Buchstabe d) dargestellt. Sobald das Dämpfungselement 318 wieder seine Ruheposition erreicht, wird ausschließlich regenerativ und/oder weich direkt über die Steuerungseinheit gebremst. Der Bremsvorgang endet, sobald wieder die Neutralstellung erreicht ist.

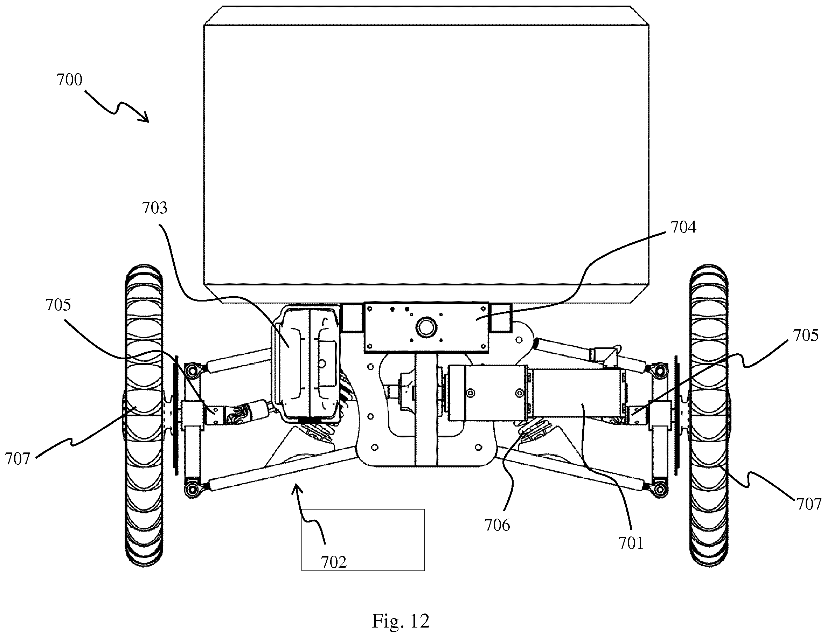

In Figur 12 ist ein Anhänger 700 gemäß einer weiteren Ausgestaltung zu sehen. Der Anhänger umfasst eine Doppelquerlenker-Radaufhängung 702 als doppelt gedämpftes Fahrwerk. Eine erfindungsgemäße Sensoreinheit 704 ist frontseitig an dem Anhänger 700 angebracht. Ein den Anhänger 700 antreibender Elektromotor 701 wird über eine Batterie 703 mit Energie versorgt. Der Elektromotor 701 sowie die Batterie 703 sind über Gelenkachsen 705 gelagert. Jedes der Räder 707 ist über unabhängige Federungen 706 gelagert. Dieser Anhänger erlaubt eine verbesserte Straßenhaftung und verringert den Einfluss von der Leistung der Sensoreinheit 704 negativ beeinflussenden Störeffekten. Auch dieser Anhänger ist für das erfindungsgemäße Verfahren geeignet.

### Bezugszeichenliste

- 101: Fahrrad
- 102: Anhänger
- 103: Sensoreinheit
- 104: Elektromotor
- 105: Batterie
- 106: Steuerungseinheit
- 107: Bremseinheit
- 108: Deichsel
- 109: Verbindungsteil
- 110: Räder
- 111: Achse des Anhängers
- 113: Griffflächen
- 114: Handbremse
- 120: Motorsteuerung
- 121: Geschwindigkeitssensor
- 122: Leistungssteuerung
- 123: Verbrauchersteuerung
- 124: Drehgeber
- 201: Gehäuse
- 202: Seitenfläche
- 203: Zugstange
- 204: Ausgleichs stange
- 205: Verbindungsstück
- 206, 207: Halterungen
- 208: Stempel
- 209: Spiralfeder
- 210: Federsitz
- 211: Winkelsensor
- 212: Montageplatte
- 213: Sensorhebel
- 214: mechanischer Auslöser
- 215: Auslöserwippe
- 216: Anschlag
- 218: Rückstellfeder
- 219: Verbindungselemente
- 220: Dämpfungseinheit
- 230: Verlängerung
- 231: Nut
- 240: Aktuator
- 241: Zugstrebe
- 300: Sensoreinheit
- 301: Frontplatte
- 302: Rückplatte
- 303, 304: Seitenelemente
- 305: Zugstange
- 306: erstes Ankerstück
- 307: zweites Ankerstück
- 308: Tragkörper
- 309, 310: Rollen
- 311: Sensorstreifen
- 312: Sensorelement
- 313, 314: Federn
- 315: Zugkabel
- 316: Kabelhülsen
- 317: Verbindungsstück
- 318: Dämpfungseinheit
- 319: Mitnehmer
- 320: Dämpferstange
- 321: Federdämpfer
- 330: mechanischer Auslöser
- 700: Anhänger
- 701: Elektromotor
- 702: Doppelquerlenker-Radaufhängung,
- 703: Batterie
- 704: Sensoreinheit
- 705: Gelenkachsen
- 706: Federungen
- 707: Räder

## Patentansprüche

1. Verfahren zur Ansteuerung eines mit einem Elektromotor angetriebenen Anhängers, mit den Schritten
• Definieren eines Abstands zwischen Anhänger (102, 700) und Schleppfahrzeug (101) als Neutralstellung,
• Messen einer Abweichung des Abstands zwischen Anhänger (102, 700) und Schleppfahrzeug (101) von der Neutralstellung und Ausgabe dieser Abweichung als Abstandswert,
• Elektrisch betätigtes Bremsen des Anhängers (102, 700), wenn der Abstand zwischen Anhänger (102, 700) und Schleppfahrzeug (101) gegenüber der Neutralstellung um mindestens einen ersten Abstandswert verringert ist,
• Mechanisch betätigtes Bremsen des Anhängers (102, 700) unabhängig von dem elektrisch betätigten Bremsen, wenn der Abstand zwischen Anhänger (102, 700) und Schleppfahrzeug (101) gegenüber der Neutralstellung um mindestens einen zweiten Abstandswert verringert ist, wobei der zweite Abstandswert größer als der erste Abstandswert ist,
• Beschleunigen des Anhängers (102, 700) durch den Elektromotor (104, 701), wenn der Abstand zwischen Anhänger (102, 700) und Schleppfahrzeug (101) gegenüber der Neutralstellung um einen dritten Abstandswert vergrößert ist.

2. Verfahren nach Anspruch 1, **dadurch gekennzeichnet, dass** das elektrisch betätigte Bremsen des Anhängers (102, 700) ein regeneratives Bremsen und/oder ein weiches direktes Bremsen auslöst und das mechanisch betätigte Bremsen des Anhängers (102, 700) ein hartes direktes Bremsen auslöst, wobei das harte direkte Bremsen einen stärkeren Anstieg der Bremskraft in Abhängigkeit der Abstandsabweichung zwischen Anhänger (102, 700) und Schleppfahrzeug (101) aufweist als das weiche direkte Bremsen.

3. Verfahren nach Anspruch 2, **dadurch gekennzeichnet, dass** das regenerative Bremsen über den Elektromotor (104, 701) und/oder das weiche und harte direkte Bremsen über eine direkte Bremse (107) erreicht wird.

4. Verfahren nach einem der vorhergehenden Ansprüche, **gekennzeichnet durch** Beenden des elektrisch betätigten Bremsens, wenn der Abstand zwischen Anhänger (102, 700) und Schleppfahrzeug (101) gegenüber der Neutralstellung um einen vierten Abstandswert verringert ist, wobei der vierte Abstandswert kleiner als der erste Abstandswert ist.

5. Verfahren nach einem der vorhergehenden Ansprüche, **gekennzeichnet durch** Beenden des mechanisch betätigten Bremsens und Beginn oder Fortführung des elektrisch betätigten Bremsens, wenn der Abstand zwischen Anhänger (102, 700) und Schleppfahrzeug (101) gegenüber der Neutralstellung um einen fünften Abstandswert verringert ist, wobei der fünfte Abstandswert kleiner als der zweite Abstandswert, aber größer als der vierte Abstandswert ist.

6. Verfahren nach einem der vorhergehenden Ansprüche, **gekennzeichnet durch** Beenden des Beschleunigens, wenn der Abstand zwischen Anhänger (102, 700) und Schleppfahrzeug (101) gegenüber der Neutralstellung um einen sechsten Abstandswert vergrößert ist, wobei der sechste Abstandswert kleiner als der dritte Abstandswert ist.

7. Verfahren nach einem der vorhergehenden Ansprüche, **gekennzeichnet durch** die Definition der Neutralstellung derart, dass der Anhänger (102, 700) dem Schleppfahrzeug (101) nachläuft ohne eine Last zu bilden oder dass der Anhänger (102, 700) das Schleppfahrzeug (101) schiebt.

8. Motorgetriebener Anhänger mit
• mindestens einem Rad (110, 707),
• einem Elektromotor (104, 701) zum Antreiben des mindestens einen Rads (110, 707),
• mindestens einer Speichereinheit (105, 703) zur Energieversorgung des Elektromotors (104, 701),
• einer Deichsel (108) zur Verbindung des Anhängers (102, 700) mit einem Schleppfahrzeug (101),
• einer Sensoreinheit (103, 300) an der Deichsel (108), die dazu ausgebildet ist, zwischen Schleppfahrzeug (101) und Anhänger (102, 700) auftretende Abstandsabweichungen von einer Neutralstellung zu messen und ein der Abstandsabweichung entsprechendes elektrisches Messsignal zu erzeugen,
• einer auf das elektrische Messsignal ansprechenden Steuerungseinheit (106), welche dazu ausgebildet ist, auf Grundlage des elektrischen Messsignals der Sensoreinheit (103, 300) den Anhänger (102, 700) zu bremsen, wenn der Abstand zwischen Anhänger (102, 700) und Schleppfahrzeug (101) gegenüber der Neutralstellung um mindestens einen ersten Abstandswert verringert ist, und auf Grundlage des elektrischen Messsignals der Sensoreinheit (103, 300) den Elektromotor (104, 701) anzusteuern, um den Anhänger (102, 700) zu beschleunigen, wenn der Abstand zwischen Anhänger (102, 700) und Schleppfahrzeug (101) gegenüber der Neutralstellung um einen dritten Abstandswert vergrößert ist, **gekennzeichnet durch**
• einen mechanischen Auslöser (214, 330), der dazu ausgebildet ist, unabhängig von der Steuerungseinheit (106) auf Grundlage der Abstandsabweichung den Anhänger (102, 700) zu bremsen, wenn der Abstand zwischen Anhänger (102, 700) und Schleppfahrzeug (101) gegenüber der Neutralstellung um mindestens einen zweiten Abstandswert verringert ist, wobei der zweite Abstandswert größer als der erste Abstandswert ist.

9. Anhänger nach Anspruch 8, **dadurch gekennzeichnet, dass** die auf das elektrische Messsignal ansprechende Steuerungseinheit (106) dazu ausgebildet ist, auf Grundlage des elektrischen Messsignals den Anhänger (102, 700) regenerativ zu bremsen und/oder den Anhänger (102, 700) weich direkt zu bremsen und dass der mechanische Auslöser (214, 330) dazu ausgebildet ist, auf Grundlage der Abstandsabweichung den Anhänger (102) hart direkt zu bremsen, wobei das harte Bremsen einen stärkeren Anstieg der Bremskraft in Abhängigkeit der Abstandsabweichung zwischen Anhänger (102, 700) und Schleppfahrzeug (101) aufweist als das weiche Bremsen.

10. Anhänger nach Anspruch 9, **dadurch gekennzeichnet, dass** das regenerative Bremsen über den Elektromotor (104, 701) und/oder das weiche und harte direkte Bremsen über eine Bremseinheit (107) mit einer direkten Bremse erreicht wird.

11. Anhänger nach einem der Ansprüche 8 bis 10, **dadurch gekennzeichnet, dass** eine elektrische Batterie (105, 703) als Speichereinheit zur Energieversorgung des Elektromotors (104, 701) vorgesehen ist.

12. Anhänger nach einem der Ansprüche 8 bis 11, **gekennzeichnet durch** einen zumindest mit dem Elektromotor (105, 701) und der Steuerungseinheit (106) verbundenen Geschwindigkeitssensor (121).

13. Anhänger nach einem der Ansprüche 8 bis 12, **dadurch gekennzeichnet, dass** die Sensoreinheit (300) folgendes umfasst: ein Gehäuse, eine sich aus dem Gehäuse erstreckende Zugstange (305) zur Verbindung mit der Deichsel (108), wobei die Zugstange (305) gegenüber dem Gehäuse verschiebbar gelagert ist, und einen die relative Position zwischen Gehäuse und Zugstange (305) ermittelnden Abstandssensor (311, 312), wobei die Zugstange (305) ohne eine mechanisch rückstellende Kraft in einem Normalbereich verschiebbar gehalten ist, wobei der Normalbereich über den ersten und dritten Abstandswert hinausgeht.

14. Anhänger nach Anspruch 13, **dadurch gekennzeichnet, dass** die Sensoreinheit (300) weiterhin mehrere mit der Zugstange (305) verbundene Rollen (309, 310) und einen Teil des Gehäuses bildende, die Rollen aufnehmende Führungselemente (303, 304) umfasst, wobei die Zugstange (305) über die Rollen (309, 310) gegenüber den Führungselementen (303, 304) beweglich gelagert ist.

15. Anhänger nach Anspruch 13 oder 14, **dadurch gekennzeichnet, dass** der mechanische Auslöser eine Dämpfungseinheit (318) mit einer Dämpferstange (320) und einen mit der Zugstange (305) verbundenen Mitnehmer (319) umfasst, wobei der mechanische Auslöser den Anhänger (102) bremst, indem durch eine Bewegung der Zugstange (305) der Mitnehmer (319) die Dämpferstange (320) in die Dämpfungseinheit (318) treibt.

## Claims

1. A method for controlling a trailer driven by an electric motor, comprising the steps:
• Defining a distance between the trailer (102, 700) and a towing vehicle (101) as a neutral position,
• Measuring a deviation of the distance between the trailer (102, 700) and towing vehicle (101) from the neutral position and outputting this deviation as a distance value,
• Electrically-actuated braking of the trailer (102, 700) when the distance between the trailer (102, 700) and the towing vehicle (101) is decreased relative to the neutral position by at least one first distance value,
• Mechanically-actuated braking of the trailer (102, 700) independent of the electrically-actuated braking when the distance between the trailer (102, 700) and towing vehicle (101) is decreased relative to the neutral position by at least one second distance value, wherein the second distance value is greater than the first distance value,
• Accelerating the trailer (102, 700) by the electric motor (104, 701) when the distance between the trailer (102, 700) and the towing vehicle (101) is increased relative to the neutral position by a third distance value.

2. The method according to claim 1, **characterized in that** the electrically-actuated braking of the trailer (102, 700) triggers a regenerative braking and/or a soft, direct braking, and the mechanically-actuated braking of the trailer (102, 700) triggers a hard, direct braking, wherein the hard, direct braking exhibits a stronger increase in the braking force depending on the deviation in distance between the trailer (102, 700) and towing vehicle (101) than the soft, direct braking.

3. The method according to claim 2, **characterized in that** the regenerative braking is achieved by the electric motor (104, 701) and/or the soft and hard direct braking are achieved by a direct brake (107).

4. The method according to one of the preceding claims, **characterized by** termination of the electrically-actuated braking when the distance between the trailer (102, 700) and towing vehicle (101) is decreased relative to the neutral position by a fourth distance value, wherein the fourth distance value is less than the first distance value.

5. The method according to one of the preceding claims, **characterized by** termination of the mechanically-actuated braking, and initiation or continuation of the electrically-actuated braking when the distance between the trailer (102, 700) and towing vehicle (101) is decreased relative to the neutral position by a fifth distance value, wherein the fifth distance value is less than the second distance value but greater than the fourth distance value.

6. The method according to one of the preceding claims, **characterized by** termination of the acceleration when the distance between the trailer (102, 700) and towing vehicle (101) is increased relative to the neutral position by a sixth distance value, wherein the sixth distance value is less than the third distance value.

7. The method according to one of the preceding claims, **characterized by** defining the neutral position such that the trailer (102, 700) lags behind the towing vehicle (101) without forming a load or the trailer (102, 700) pushes the towing vehicle (101).

8. A motor-driven trailer with:
• at least one wheel (110, 707),
• an electric motor (104, 701) for driving the at least one wheel (110, 707),
• at least one storage unit (105, 703) for supplying energy to the electric motor (104, 701),
• a drawbar (108) for connecting the trailer (102, 700) to a towing vehicle (101),
• a sensor unit (103, 300) on the drawbar (108) which is designed to measure deviations in distance from a neutral position that arise between the towing vehicle (101) and trailer (102, 700), and to generate an electrical measuring signal that corresponds to the deviation in distance,
• a control unit (106) that responds to the electrical measuring signal and is designed to brake the trailer (102, 700) based on the electrical measuring signal from the sensor unit (103, 300) when the distance between the trailer (102, 700) and towing vehicle (101) is reduced relative to the neutral position by at least one first distance value, and to control the electric motor (104, 701) based on the electric measuring signal from the sensor unit (103, 300) in order to accelerate the trailer (102, 700) when the distance between the trailer (102, 700) and towing vehicle (101) is increased relative to the neutral position by a third distance value.
• a mechanical trigger (214, 330) that is designed to brake the trailer (102, 700) independent from the control unit (106) based on the deviation in distance when the distance between the trailer (102, 700) and towing vehicle (101) is reduced relative to the neutral position by at least one second distance value, wherein second distance value is greater than the first distance value.

9. The trailer according to claim 8, **characterized in that** the control unit (106) that responds to the electrical measuring signal is designed to regeneratively brake the trailer (102, 700) based on the electrical measuring signal, and/or to directly brake the trailer (102, 700) softly, and the mechanical trigger (214, 330) is designed to directly brake the trailer (102) hard based on the deviation in distance, wherein the hard braking exhibits a stronger rise in the braking force depending on the deviation in distance between the trailer (102, 700) and towing vehicle (101) than the soft braking.

10. The trailer according to claim 9, **characterized in that** the regenerative braking is achieved by the electric motor (104, 701) and/or the soft and hard direct braking are achieved by a brake unit (107) with a direct brake.

11. The trailer according to one of claims 8 to 10, **characterized in that** an electrical battery (105, 703) is provided as a storage unit for supplying energy to the electric motor (104, 701).

12. The trailer according to one of claims 8 to 11, **characterized by** a speed sensor (121) that is connected at least to the electric motor (104, 701) and the control unit (106).

13. The trailer according to one of claims 8 to 12, **characterized in that** the sensor unit (300) comprises the following: a housing, a pull rod (305) extending out of the housing for connection to the drawbar (108), wherein the pull rod (305) is mounted so as to be shiftable relative to the housing, and a distance a sensor (311, 312) which determines the relative position between the housing and pull rod (305), wherein the pull rod (305) is shiftably held within a normal range without a mechanical restoring force, wherein the normal range extends beyond the first and third distance value.

14. The trailer according to claim 13, **characterized in that** the sensor unit (300) furthermore comprises a plurality of rollers (309, 310) connected to the pull rod (305) and guide elements (303, 304) forming part of the housing and accommodating the rollers, wherein the pull rod (305) is movably mounted on the rollers (309, 310) relative to the guide elements (303, 304).

15. The trailer according to claim 13 or 14, **characterized in that** the mechanical trigger comprises a damping unit (318) with a damper rod (320) and a driver (319) that is connected to the pull rod (305), wherein the mechanical trigger brakes the trailer (102) **in that** the driver (319) drives the damper rod (320) into the damping unit (318) by means of a movement of the pull rod (305).

## Revendications

1. Procédé de commande d'une remorque entraînée par un moteur électrique, comprenant les étapes suivantes :
• la définition de la distance entre la remorque (102, 700) et le véhicule tracteur (101) comme position neutre,
• la mesure d'un écart de la distance entre la remorque (102, 700) et le véhicule tracteur (101) par rapport à la position neutre, puis la délivrance de cet écart en tant que valeur de distance,
• le freinage actionné électriquement de la remorque (102, 700), lorsque la distance entre la remorque (102, 700) et le véhicule tracteur (101) est réduite d'au moins une première valeur de distance par rapport à la position neutre,
• le freinage actionné mécaniquement de la remorque (102, 700) indépendamment du freinage actionné électriquement, lorsque la distance entre la remorque (102, 700) et le véhicule tracteur (101) est réduite d'au moins une deuxième valeur de distance par rapport à la position neutre, la deuxième valeur de distance étant plus grande que la première valeur de distance,
• l'accélération de la remorque (102, 700) par un moteur électrique (104, 701), lorsque la distance entre la remorque (102, 700) et le véhicule tracteur (101) est accrue d'une troisième valeur de distance par rapport à la position neutre.

2. Procédé selon la revendication 1, **caractérisé en ce que** le freinage actionné électriquement de la remorque (102, 700) déclenche un freinage régénératif et/ou un freinage direct doux et que le freinage actionné mécaniquement de la remorque (102, 700) déclenche un freinage direct dur, dans lequel le freinage direct dur présente une augmentation plus forte de la force de freinage en fonction de l'écart de distance entre la remorque (102, 700) et le véhicule tracteur (101) que le freinage direct doux.

3. Procédé selon la revendication 2, **caractérisé en ce que** le freinage régénératif est obtenu par le biais du moteur électrique (104, 701) et/ou le freinage direct doux et dur par le biais d'un frein direct (107).

4. Procédé selon l'une des revendications précédentes, **caractérisé par** la fin du freinage actionné électriquement, lorsque la distance entre la remorque (102, 700) et le véhicule tracteur (101) est réduite d'une quatrième valeur de distance par rapport à la position neutre, la quatrième valeur de distance étant plus petite que la première valeur de distance.

5. Procédé selon l'une des revendications précédentes, **caractérisé par** la fin du freinage actionné mécaniquement et le début ou la poursuite du freinage actionné électriquement, lorsque la distance entre la remorque (102, 700) et le véhicule tracteur (101) est réduite d'une cinquième valeur de distance par rapport à la position neutre, la cinquième valeur de distance étant plus petite que la deuxième valeur de distance, mais plus grande que la quatrième valeur de distance.

6. Procédé selon l'une des revendications précédentes, **caractérisé par** la fin de l'accélération, lorsque la distance entre la remorque (102, 700) et le véhicule tracteur (101) est accrue d'une sixième valeur de distance par rapport à la position neutre, la sixième valeur de distance étant plus petite que la troisième valeur de distance.

7. Procédé selon l'une des revendications précédentes, **caractérisé par** la définition de la position neutre de sorte que la remorque (102, 700) se met dans le sillage du véhicule tracteur (101) sans former une charge ou que la remorque (102, 700) pousse le véhicule tracteur (101).

8. Remorque entraînée par moteur comprenant
• au moins une roue (110, 707),
• un moteur électrique (104, 701) pour entraîner au moins ladite roue (110, 707),
• au moins une unité de stockage (105, 703) pour alimenter le moteur électrique (104, 701) en énergie,
• un timon (108) pour atteler la remorque (102, 700) au véhicule tracteur (101),
• une unité de détection (103, 300) sur le timon (108), qui est conçue pour mesurer des écarts de distance par rapport à une position neutre et générer un signal de mesure électrique correspondant à l'écart de distance,
• une unité de commande (106) réagissant au signal de mesure électrique, qui est conçue pour freiner la remorque (102, 700) sur la base du signal de mesure électrique de l'unité de détection (103, 300), lorsque la distance entre la remorque (102, 700) et le véhicule tracteur (101) est réduite d'au moins une première valeur de distance par rapport à la position neutre, et pour activer le moteur électrique (104, 701) sur la base du signal de mesure électrique de l'unité de détection (103, 300) afin d'accélérer la remorque (102, 700), lorsque la distance entre la remorque (102, 700) et le véhicule tracteur (101) est accrue d'une troisième valeur de distance par rapport à la position neutre,
**caractérisée par**
• un déclencheur mécanique (214, 330), qui est conçu pour freiner la remorque (102, 700) sur la base de l'écart de distance indépendamment de l'unité de commande (106), lorsque la distance entre la remorque (102, 700) et le véhicule tracteur (101) est réduite d'au moins une deuxième valeur de distance par rapport à la position neutre, la deuxième valeur de distance étant plus grande que la première valeur de distance.

9. Remorque selon la revendication 8, **caractérisée en ce que** l'unité de commande (106) réagissant au signal de mesure électrique est conçue pour soumettre la remorque (102, 700) à un freinage régénératif et/ou à un freinage direct en douceur sur la base du signal de mesure électrique et que le déclencheur mécanique (214, 330) est conçu pour soumettre la remorque (102, 700) à un freinage direct dur sur la base de l'écart de distance, le freinage dur présentant une augmentation plus forte de la force de freinage en fonction de l'écart de distance entre la remorque (102, 700) et le véhicule tracteur (101) que le freinage doux.

10. Remorque selon la revendication 9, **caractérisée en ce que** le freinage régénératif est obtenu par le biais du moteur électrique (104, 701) et/ou le freinage direct doux et dur par le biais d'une unité de freinage (107) dotée d'un frein direct.

11. Remorque selon l'une des revendications 8 à 10, **caractérisée en ce qu'**une batterie électrique (105, 703) est prévue comme unité de stockage pour alimenter le moteur électrique (104, 701) en énergie.

12. Remorque selon l'une des revendications 8 à 11, **caractérisée par** un capteur de vitesse (121) relié au moins au moteur électrique (104, 701) et à l'unité de commande (106).

13. Remorque selon l'une des revendications 8 à 12, **caractérisée en ce que** l'unité de détection (300) comporte les éléments suivants : un boîtier, une barre de traction (305) s'étendant du boîtier pour être attachée au timon (108), dans laquelle la barre de traction (305) est montée de façon à pouvoir être déplacée par rapport au boîtier et un capteur de distance (311, 312) évaluant la position relative entre le boîtier et la barre de traction (305), dans laquelle la barre de traction (305) est maintenue de façon à pouvoir être déplacée dans une plage normale sans force de rappel mécanique, la plage normale allant au-delà de la première et de la troisième valeur de distance.

14. Remorque selon la revendication 13, **caractérisée en ce que** l'unité de détection (300) comporte encore plusieurs galets (309, 310) reliés à la barre de traction (305) et des éléments de guidage (303, 304) recevant les galets et formant une partie du boîtier, dans laquelle la barre de traction (305) est montée de façon mobile par rapport aux éléments de guidage (303, 304) par le biais des galets (309, 310).

15. Remorque selon la revendication 13 ou 14, **caractérisée en ce que** le déclencheur mécanique comporte une unité d'amortissement (318) dotée d'une bielle d'amortisseur (320) et un toc d'entraînement (319) relié à la barre de traction (305), dans laquelle le déclencheur mécanique freine la remorque (102), du fait que le toc d'entraînement (319) pousse la bielle d'amortisseur (320) dans l'unité d'amortissement (318) moyennant un mouvement de la barre de traction (305).
